# FASCICULE DE BREVET EUROPEEN

(11) **EP 2 646 312 B1**
(45) Date de publication et mention de la délivrance du brevet: **27.04.2016**
(21) Numéro de dépôt: 11787890.0
(22) Date de dépôt: 24.11.2011
(51) Int. Cl.: B63B 27/34, B63B 27/24, B65G 67/60, B67D 9/02

(54) **DISPOSITIF DE TRANSFERT DE FLUIDE DEPUIS UN SUPPORT EN MER**
VORRICHTUNG ZUM ÜBERTRAGEN EINES FLUIDS AUS EINER MARINEN HALTERUNG
DEVICE FOR TRANSFERRING FLUID FROM A MARINE MOUNTING

(30) Priorité: 30.11.2010 FR 1059911
(43) Date de publication de la demande: 09.10.2013
(73) Titulaire: SAIPEM S.A., 78180 Montigny-le-Bretonneux (FR)
(72) Inventeur: HALLOT, Raymond, 78960 Voisins Le Bretonneux (FR); BRUGUIER, Cédric, 75018 Paris (FR); MAURIES, Benjamin, 75014 Paris (FR)
(74) Mandataire: Domange, Maxime
(86) Numéro de dépôt international: PCT/EP2011/070977
(87) Numéro de publication internationale: WO 2012/072499

(56) Documents cités:
- EP-A1- 1 705 111
- EP-A1- 2 239 190
- WO-A1-99/35031
- GB-A- 2 420 319

## Description

La présente invention concerne un dispositif et un procédé de transfert de fluide, de préférence un produit pétrolier liquide ou gazeux, depuis un support installé en mer ouverte, de manière fixe ou flottant, c'est-à-dire reposant ou respectivement ancré au fond de la mer, de préférence un dispositif et procédé de transfert de fluide entre un dit support et un navire de préférence de type méthanier disposé à couple ou en tandem à côté dudit support. Ledit dispositif de transfert comprend une pluralité de n conduites flexibles stockées ou aptes à être stockées sur un dit support à l'aide d'un dispositif de stockage de conduites flexibles au niveau duquel une première extrémité de chacune desdites conduites flexibles est fixée, de préférence lesdites conduites flexibles s'étendant ou étant aptes à s'étendre entre ledit support et un dit navire.

La présente invention concerne également un dit dispositif de transfert comprenant en outre un dit support, le cas échéant un dit navire de préférence de type méthanier disposé à couple ou en tandem à côté dudit support flottant, un dit dispositif de stockage, de préférence un dit dispositif de stockage et de guidage, et au moins deux conduites flexibles, de préférence au moins 3 conduites flexibles s'étendant entre un dit support sur lequel lesdites conduites flexibles sont stockées à l'aide d'un dit dispositif de stockage. Le dispositif de transfert selon l'invention comprend un dispositif de connexion et de vannes utile notamment pour la purge des conduites flexibles.

Un dispositif de stockage de conduites flexibles disposé à bord d'un support selon l'invention permet la manutention desdites conduites flexibles pour leur stockage à l'état enroulé entre deux transferts de fluide au sein desdites conduites flexibles entre le support flottant et un navire enleveur, et pour le déroulement desdites conduites afin de mettre en oeuvre un dit transfert de fluide entre un dit support flottant et un dit navire de préférence de type méthanier.

Un domaine technique d'utilisation plus particulier d'un support selon l'invention est le domaine du déchargement en mer de produits pétroliers incluant aussi bien du pétrole brut liquide que du gazole ou des gaz liquéfiés, notamment du gaz naturel GNL, ou encore du gaz à l'état gazeux, depuis un dit support, par exemple au niveau d'un champs pétrolier, vers un navire enleveur disposé à couple ou en tandem comme explicité ci-après.

Le secteur technique de l'invention est plus particulièrement encore le domaine du transfert en mer de gaz naturel liquéfié (GNL) à -165°C, entre un support flottant comprenant au moins une cuve de stockage de GNL, et un navire de préférence de type méthanier disposé en tandem, c'est-à-dire à une certaine distance du support flottant dans la même direction longitudinale que ledit support flottant.

Sur les champs pétroliers en mer ouverte, situés à grande distance de la côte, les produits pétroliers tel que le pétrole ou le gaz sont en général récupérés, traités et stockés à bord d'un dit support flottant notamment du type appelé FPSO (« Floating-Production-Storage-Offloading »), c'est à dire support flottant de production, de stockage et de déchargement. Les produits pétroliers tel que pétrole et/ou gaz sont alors exportés par des navires enleveurs qui viennent régulièrement, par exemple toutes les semaines, pour récupérer la production du champ. Trois techniques sont couramment employées à cet effet.

Une première technique consiste à installer à grande distance, soit à environ 1000-1500m du FPSO, une bouée dite de chargement reliée au FPSO par une conduite sous-marine, le pétrole ou gaz étant transféré dans ladite bouée de déchargement via ladite conduite sous-marine. Un pétrolier enleveur vient alors s'amarrer à ladite bouée de chargement, puis le chargement est récupéré via des conduites flexibles de liaison connectées à ladite bouée flottant à la surface de la mer, le pétrole ou gaz étant alors poussé par une pompe embarquée à bord du FPSO pour effectuer le chargement du pétrolier enleveur.

Une seconde technique consiste à faire venir le navire enleveur à couple du FPSO, c'est à dire bordé contre bordé. Dans ce cas, le transfert est effectué soit par des bras de chargement de type articulés, comme il est d'usage lors des transferts au port, soit par des conduites flexibles de longueurs réduites.

Une troisième technique consiste à disposer le navire enleveur en tandem avec le FPSO, c'est à dire que le navire enleveur se positionne dans l'axe du FPSO à une distance de sécurité d'au moins 50 à 150m, puis s'amarre à ce dernier, et on récupère l'extrémité des conduites flexibles s'étendant depuis le support flottant où elles sont connectées à une cuve à leur autre extrémité et flottant sur la mer, pour les connecter à bord du dit navire enleveur, le pétrole ou le gaz étant alors poussé par une pompe depuis le FPSO pour effectuer le chargement du pétrolier enleveur.

Sur les champs pétroliers, on privilégie en général la mise en oeuvre de bouée de chargement, mais on lui adjoint en général un dispositif de redondance qui peut être soit un dispositif à couple c'est-à-dire avec un navire enleveur disposé à couple du FPSO, soit un dispositif en tandem c'est-à-dire avec un navire enleveur disposé en tandem du FPSO, parfois même les deux dispositifs.

Dans le cas du pétrole brut, dans toutes les configurations, les conduites de liaisons, soit vers une bouée de déchargement, soit vers un navire enleveur, restent pleines, soit dudit pétrole brut, soit d'un produit pétrolier, en général du gazole, qui a servi à remplacer le pétrole brut lorsque ce dernier présente des risques de figeage (bruts paraffiniques).

En revanche, lorsqu'il s'agit de transfert de gaz liquéfié de type GNL à -165°C, les dispositifs de transfert comportent au moins une conduite de liaison aller pour le gaz liquéfié, et une conduite de liaison de retour, en général de diamètre plus faible, pour évacuer le gaz des cuves du navire enleveur au fur et à mesure du remplissage par le GNL, en particulier du gaz méthane, de manière à le reliquéfier à bord du FPSO. De plus, les conduites de liaisons flexibles doivent être quasi intégralement vidées après déchargement, de manière à éviter la formation et l'accumulation de glace sur lesdites conduites et plus particulièrement au niveau des raccords mécaniques desdites conduites. De plus ces dernières doivent comporter une isolation extrême de manière à limiter la regazéification du méthane liquide (GNL) au cours de son transfert. C'est pourquoi, à cet effet, on privilégie les modes de déchargement avec des dispositifs à couple et en tandem dans lesquels les conduites de liaison ne sont pas des conduites sous-marines mais des conduites flottant en surface, d'une part et d'autre part, lesdites conduites étant relativement de plus petites longueur.

Le déchargement à couple est cependant très délicat car l'approche d'un navire enleveur pour venir se positionner parallèlement au FPSO à moins de 5m de distance, n'est envisageable que dans des conditions de mer très clémentes. En effet, en cas de mauvaise mer, le transfert devient impossible et cela peut conduire, si le FPSO est plein, à devoir arrêter la production, ce qui constitue un sérieux handicap pour la rentabilité des installations d'exploitation du champ pétrolier en cause. Les moyens de transfert sont dans ce cas soit constitués de bras de chargement conventionnels, soit de dispositifs comportant des conduites flexibles, installés à bord dudit FPSO. Le brevet EP-2 239 190 décrit un tel dispositif de déchargement à couple.

Le déchargement en tandem présente une sécurité beaucoup plus grande, mais les conduites de déchargement sont plus longues et donc plus compliquées à manoeuvrer et à stocker à bord du FPSO. Pour ce faire, de nombreux dispositifs de stockage et guidage de conduites flexibles à bord du FPSO ont été développés. Certains utilisent une structure porteuse considérable de type articulé supportant une pluralité de conduites rigides comportant des joint tournants en guise d'articulation, comme détaillé dans le brevet US-4,393,906

D'autres solutions comprennent la mise en oeuvre de conduites rigides articulées avec joints tournants, ou de flexibles disposés en guirlande entre le FPSO et el navire enleveur, telle que explicité dans le brevet WO/01-04041.

Un autre domaine technique est celui du stockage en mer de GNL près d'un site d'utilisation, par exemple pour expédier le gaz sur le continent après l'avoir regazéifié, ou encore le transformer sur place en énergie électrique pour réexpédier ladite électricité dans le réseau local. Dans ce cas, le navire vient décharger sa cargaison de GNL et le support flottant est appelé « FSRU » (Floating Storage Regaseification Unit), c'est à dire unité flottante de stockage et de regazéification.

Un but de la présente invention est de fournir un dispositif de transfert amélioré pour le transfert en couple ou en tandem entre un support et un navire de type méthanier, notamment pour le déchargement dudit support vers un navire enleveur.

Plus particulièrement, le but de la présente invention est de fournir un dispositif de transfert amélioré à l'aide de conduites flexibles s'étendant depuis un support en mer équipé d'un dispositif de support et de guidage de conduites flexibles, facilitant la manutention desdites conduites pour mettre en oeuvre un transfert de fluide entre ledit support et un navire enleveur ainsi que pour stocker lesdites conduites flexibles à bord du support entre deux transferts.

Un problème à résoudre est de faciliter le raccordement des extrémités des conduites flexibles à bord d'un navire enleveur lorsque lesdites conduites sont des conduites de transfert de produits pétroliers s'étendant depuis un support installé en mer jusqu'à un dit navire enleveur d'une part, et d'autre part de faciliter la vidange des conduites flexibles de transfert après déchargement dudit produit pétrolier avant de le re-stocker à l'aide d'un dispositif de stockage à bord dudit support.

Pour ce faire, la présente invention concerne de préférence un dispositif de transfert depuis un support installé en mer, équipé d'un dispositif de stockage de conduites flexibles au niveau duquel sont fixées les premières extrémités d'une pluralité de conduites flexibles, s'étendant de préférence entre ledit support et un navire de préférence de type méthanier, lesdites conduites étant réunies entre elles au niveau de leurs deuxièmes extrémités par un premier dispositif de connexion et de vannes comprenant n premières portions de conduites, apte à être connecté à un deuxième dispositif de connexion et de vannes, de préférence installé à bord d'un dit navire de préférence de type méthanier.

Plus précisément, la présente invention fournit un dispositif de transfert de fluide selon la revendication 1.

On comprend que chaque dite première vanne de connexion située entre ledit premier élément de raccordement et ladite dérivation est apte à autoriser ou empêcher la circulation de fluide dans ladite première portion de conduite vers ou provenant dudit premier élément de raccordement lorsqu'elle est ouverte ou respectivement fermée.

Un dispositif de connexion et de vannes selon l'invention est particulièrement utile pour réaliser la purge d'un ensemble de conduites flexibles après que celles-ci aient servi au déchargement d'un produit pétrolier liquide entre un dit support installé en mer et un dit navire enleveur tel que décrit ci-après, avant de les stocker à l'aide d'un dit dispositif de stockage, ceci afin d'éviter tout endommagement desdites conduites flexibles d'une part et d'autre part de faciliter ce restockage à l'aide dudit dispositif de stockage.

De préférence, le dispositif de transfert selon l'invention comprend en outre un deuxième dispositif de connexion et de vannes disposé ou apte à être disposé à bord dudit navire de préférence de type méthanier, disposé à couple ou en tandem à côté dudit support, notamment en face d'un bordé dudit support, ledit premier dispositif de connexion et de vannes étant connecté ou apte à être connecté audit deuxième dispositif de connexion et de vannes, ledit deuxième dispositif de connexion et de vannes comprenant :
- n deuxièmes portions de conduites, de préférence rigides,
- chaque dite deuxième portion de conduite communicant ou étant apte à communiquer à une de ses extrémités avec une deuxième cuve à l'intérieur dudit navire de préférence de type méthanier et comprenant à son autre extrémité un premier élément de raccordement complémentaire de conduite, ledit premier élément de raccordement complémentaire étant apte à coopérer en raccordement réversible avec un dit premier élément de raccordement, ledit premier élément de raccordement complémentaire étant de préférence une partie femelle ou respectivement mâle de connecteur automatique,

- lesdites deuxièmes portions de conduite étant maintenues en position relative fixe les unes par rapport aux autres de préférence parallèlement de façon à permettre le raccordement desdits premiers éléments de raccordement complémentaires avec lesdits premiers éléments de raccordements,
- chaque dite deuxième portion de conduite comprenant une deuxième vanne de connexion apte à autoriser ou empêcher la circulation de fluide dans ladite deuxième portion de conduite vers ou provenant dudit premier élément de raccordement complémentaire lorsqu'elle est ouverte ou respectivement fermée,
- lesdites deuxièmes portions de conduite étant de préférence maintenues parallèles entre elles par un deuxième support rigide auquel elles sont solidarisées,
- lesdites deuxièmes vannes de connexion étant de préférence des vannes à boisseau sphérique.

Plus particulièrement, lesdites conduites flexibles comprennent au moins une première conduite flexible, de préférence au moins deux première et deuxième conduites flexibles, apte(s) à transférer du gaz liquéfié en leur sein entre ledit support flottant et au moins une deuxième cuve du dit navire de préférence de type méthanier et une deuxième conduite flexible, de préférence de diamètre inférieur à celui des dites première et deuxième conduites au sein de laquelle du gaz correspondant au ciel de gaz de la deuxième cuve est apte à être transféré depuis une dite deuxième cuve vers une première cuve au sein dudit support flottant ou une unité de liquéfaction sur un dit support avant transfert vers une dite première cuve, notamment au fur et à mesure du remplissage de ladite deuxième cuve.

En particulier, dans le cas où ledit navire méthanier est un navire enleveur et où l'on effectue le déchargement dudit gaz liquéfié depuis ledit support flottant vers ledit navire enleveur, le retour de gaz depuis ledit navire enleveur vers ledit support flottant se fait au fur et à mesure du remplissage de ladite deuxième cuve au sein dudit navire enleveur.

Plus particulièrement encore, un dispositif de transfert de fluide, notamment d'un produit pétrolier liquide ou gazeux, comprend un dit support, un dit dispositif de stockage, de préférence un dispositif de stockage et de guidage, et au moins deux conduites flexibles, de préférence au moins 3 conduites flexibles s'étendant entre un dit support et un dit navire de préférence de type méthanier disposé à couple ou en tandem à côté du dit support flottant, lesdites conduites flexibles étant en partie au moins stockées à l'aide d'un dit dispositif de stockage, lesdites conduites flexibles étant équipées d'un dit premier dispositif de connexion et de vannes, connecté à un dit deuxième dispositif de connexion et de vannes disposé ou apte à être disposé à bord d'un dit navire.

Dans un premier mode de réalisation, ledit transfert consiste en un déchargement du gaz liquéfié, depuis ledit support vers un dit navire, dénommé navire enleveur.

Dans un deuxième mode de réalisation, ledit transfert consiste en un chargement de gaz liquéfié depuis un dit navire, dénommé navire d'approvisionnement, vers ledit support. En général, il s'agit d'un chargement de gaz liquéfié qui est regazéifié au sein dudit support, pour être transféré à terre sous forme gazeuse ou pour servir à produire de l'électricité. Dans ce cas, ledit support flottant peut également contenir une unité de production d'électricité à partir dudit gaz et un poste de transformation pour expédition du courant électrique vers la terre. Dans ce cas, ledit support est, avantageusement, un support reposant au fond de la mer.

Plus particulièrement, lesdites conduites flexibles sont des conduites flottantes, flottant en surface sur une partie au moins de la distance entre le dit support et le dit navire de préférence de type méthanier.

La présente invention fournit également un procédé de transfert de fluide, de préférence un produit pétrolier liquide ou gazeux, depuis un support installé en mer, de manière fixe ou flottant, de préférence entre un dit support et un navire de préférence de type méthanier disposé à couple ou en tandem à côté dudit support, à l'aide d'un dispositif de transfert selon l'invention dans lequel on réalise le transfert d'un produit pétrolier liquide, de préférence du gaz liquéfié GNL, dans deux dites première et deuxième conduites flexibles, puis on réalise la purge desdites première et deuxième conduites flexibles ayant servies au transfert de produit liquide de préférence du gaz liquéfié GNL, entre ledit support et un dit navire de préférence de type méthanier, en réalisant les étapes successives suivantes dans lesquelles :
a. On ferme lesdites premières et deuxièmes vannes de connexion, et l'on déconnecte l'un de l'autre lesdits premier et deuxième dispositifs de connexion et de vannes, et
b. On injecte du gaz à la première extrémité d'une première conduite flexible depuis ledit support et on ouvre au moins une dite première vanne de communication entre ladite première conduite flexible et une deuxième conduite flexible assemblée au même dit premier dispositif de connexion et de vannes, les autres dites premières vannes de communication étant fermées, puis
c. On ferme ladite première vanne de communication entre lesdites première et deuxième conduites quand ladite première conduite est suffisamment vidée, de préférence sensiblement complètement vidée.

On entend par « suffisamment vidée » que le volume interne de ladite conduite rempli de fluide résiduel ne représente pas plus de 10% du volume interne total de ladite conduite, de préférence pas plus de 5%, c'est-à-dire un volume interne vide d'au moins 90%, de préférence au moins 95%, de préférence encore au moins 98% de son volume interne total.

Le procédé permet ainsi d'évacuer le contenu de ladite première conduite flexible via ladite deuxième conduite flexible et permet ainsi après l'étape c) d'avoir substantiellement vidé voire complètement vidé ladite première conduite flexible. En revanche, il peut rester encore en général au moins 10% voire jusqu'à 15% de volume interne de ladite deuxième conduite non vidée, et ce même lorsque le volume interne de ladite première conduite a été entièrement vidée.

Il est particulièrement plus difficile de vider complètement la deuxième conduite flexible après l'étape c) car la portion terminale de deuxième conduite flexible correspondant à la portion sensiblement verticale entre le niveau de la mer et son niveau d'accès au dit dispositif de stockage sur le pont dudit support avec lequel elle coopère, reste en général, au moins en partie, remplie de liquide après l'étape c), car le fluide diphasique est en mouvement vers le haut, mais la gravité a tendance à le ramener naturellement vers le niveau de la mer.

De préférence, après l'étape c), on purge complètement ladite deuxième conduite en réalisant les étapes supplémentaires suivantes :
d. On injecte du gaz depuis le support dans ladite première extrémité de ladite deuxième conduite et on ouvre ladite première vanne de communication entre ladite deuxième conduite et une troisième conduite flexible de plus petit diamètre que ladite deuxième conduite de telle sorte que le débit de gaz de purge soit tel que la vitesse dudit gaz soit supérieure à 1,5m/s de préférence supérieur à 3m/s, de préférence encore supérieur à 5m/s, les autres dites premières vannes de communication étant fermées, et
e. On ferme ladite première vanne de communication entre lesdites deuxième et troisième conduites quand ladite deuxième conduite est suffisamment vidée, de préférence sensiblement complètement vidée.

On comprend que dans ce mode de réalisation, le volume interne de produit liquide contenu dans ladite deuxième conduite est entièrement évacué par ladite troisième conduite. Le fait que ladite troisième conduite soit de plus petit diamètre permet de favoriser la vidange complète de ladite troisième conduite notamment au niveau de sa portion terminale sensiblement verticale entre le niveau de la mer et l'entrée de son plateau tournant correspondant, après l'étape e) lorsque ladite deuxième conduite a été substantiellement complètement vidée. Il est particulièrement avantageux de mettre en oeuvre la combinaison des étapes a) à e) pour vider l'ensemble des trois dites première, deuxième et troisième conduites.

Un autre problème à résoudre selon la présente invention est de fournir un dispositif de stockage et de guidage des dites conduites flexibles qui permettent d'en régler de manière contrôlée la tension et la longueur entre ledit support flottant et ledit navire enleveur de façon notamment à éviter l'interférence d'une pluralité de conduites de liaison s'étendant entre ledit support flottant et ledit navire enleveur à partir du dispositif de stockage et de guidage.

Pour ce faire, selon la présente invention ledit dispositif de transfert comprend un dit support installé en mer équipé, de préférence en surface, notamment sur le pont, d'un dispositif de stockage et de guidage de conduites flexibles comprenant essentiellement :
- une première structure porteuse supportant une pluralité de plateaux tournants disposés les uns au dessus des autres,
- des conduites flexibles enroulées ou aptes à être enroulées en spirales juxtaposées concentriques de diamètres croissants reposant sur les faces supérieures desdits plateaux,
- un raccord à joint tournant permettant le raccordement entre d'une part une première extrémité la plus proche du centre du plateau d'une conduite flexible enroulée sur ledit plateau, apte à être entrainée en rotation avec ledit plateau, et d'autre part une extrémité d'une conduite de transfert qui reste fixe lorsque ledit plateau est entrainé en rotation, de préférence en communication avec au moins une première cuve au sein dudit support, et
- une pluralité de moyens de guidage, aptes à guider les portions de dites conduites flexibles à l'extérieur desdits plateaux tournants en continuité des portions restantes de conduites reposant sur ledit plateau, de telle sorte que lesdites portions de conduites en sortie desdits plateaux soient disposées rectilignement, à des positions différentes dans une direction Y₁Y'₁ horizontale parallèle au dit bordé, à des hauteurs différentes et pouvant adopter des inclinaisons différentes α1, α2, α3 de leurs plans axiaux verticaux P1, P2, P3 par rapport à ladite direction Y₁Y₁' horizontale parallèle au dit bordé.

Plus précisément, ledit support est équipé en surface d'un dispositif de stockage et de guidage de conduites flexibles apte à stocker et guider une pluralité, de préférence au moins 3 dites conduites flexibles, ledit dispositif de stockage et de guidage comprenant :
- une première structure porteuse reposant sur ou solidaire du pont dudit support à proximité d'un bordé dudit support, de préférence une paroi d'une extrémité longitudinale dudit support, ladite première structure porteuse supportant une pluralité de plateaux circulaires tournants disposés les uns au dessus des autres,
- chaque dit plateau tournant étant apte à être entrainé en rotation de façon motorisée par un premier moteur selon un axe central vertical ZZ' indépendamment les uns des autres, de préférence selon un même axe central vertical ZZ', chaque plateau tournant comportant un orifice central surmonté par un fût central contre et autour duquel une dite conduite flexible peut être enroulée en spirales juxtaposées concentriques de diamètres croissants reposant sur la face supérieure dudit plateau, ledit orifice central dudit plateau tournant étant équipé d'un raccord à joint tournant apte à permettre le raccordement entre d'une part une première extrémité la plus proche dudit fût central d'une conduite flexible enroulée autour dudit fût central, la dite première extrémité de conduite étant apte à être entrainée en rotation avec ledit plateau tournant, et d'autre part une extrémité d'une conduite de transfert fixe dont l'autre extrémité est en communication avec au moins une première cuve au sein dudit support, et
- une pluralité de moyens de guidage, chaque dit moyen de guidage étant apte à guider la portion de dite conduite en sortie de respectivement chaque dit plateau tournant en continuité de la portion de conduite enroulée sur ledit plateau, de telle sorte que les différentes dites portions de conduites en sortie des différents plateaux tournants soient disposées rectilignement, décalées à des positions différentes dans une direction Y₁Y'₁ horizontale parallèle au dit bordé, à des hauteurs différentes et pouvant adopter une inclinaison α1, α2, α3 de leurs plans axiaux verticaux P1, P2, P3, différentes par rapport à ladite direction Y₁Y₁' horizontale parallèle au dit bordé.

On comprend que la portion de conduite en sortie de plateau correspond à la portion de conduite non enroulée en continuité de la dernière spire de la conduite enroulée, notamment en cours d'enroulement ou de déroulement.

Ce dispositif de stockage et de guidage selon l'invention est particulièrement avantageux pour disposer les unes par rapport aux autres et pour régler indépendamment la longueur et/ou la tension des différentes conduites s'étendant en sortie de plateaux entre lesdits plateaux et les deuxièmes extrémités de conduites flexibles débouchant notamment vers un deuxième navire, en particulier un navire enleveur, de manière à ce qu'elles ne risquent pas d'interférer les unes avec les autres, voire de se heurter entre elles en particulier lors du déroulement ou enroulement de la conduite avant ou respectivement après déploiement des dites conduites entre le dit support flottant et dit navire enleveur.

Ce réglage indépendant de la rotation des différents plateaux tournant est particulièrement utile et avantageux lorsque les différentes conduites flexibles enroulées sur les différents plateaux tournant sont de diamètres différents et requiert donc une vitesse d'enroulement ou de déroulement différente pour maintenir une longueur ou une tension sensiblement identique en sortie desdits plateaux tournants au cours de leur enroulement et déroulement.

C'est en particulier le cas lorsqu'on transfert du gaz liquéfié de type GNL depuis un support flottant selon l'invention vers un navire enleveur 2 tandis que dans une autre conduite flexible, en général de plus petit diamètre, on transfert du gaz à l'état gazeux correspondant au ciel de gaz des cuves depuis ledit navire enleveur vers ledit support flottant en retour comme explicité ci-après.

On entend ici par « bordé » une paroi externe quelconque de la coque du navire à savoir aussi bien les parois longitudinales latérales de la coque que les parois transversales aux extrémités longitudinales à savoir les parois avant et arrière dudit support.

On entend ici par « conduite flexible » les conduites connues sous la dénomination « flexible » sont bien connues de l'homme de l'art et qui ont été décrites dans les documents normatifs publiés par l'American Petroleum Institute (API), plus particulièrement sous les références API 17J et API RP 17 B. De tels flexibles sont notamment fabriqués et commercialisés par la Société COFLEXIP France. Ces conduites flexibles comportent en général des couches d'étanchéité internes en matériaux thermoplastiques associées à des couches résistantes à la pression interne à la conduite, en général en acier ou en matériaux composites réalisés sous forme de bandes spiralées, jointives à l'intérieur de la conduite thermoplastique pour résister à la pression interne d'éclatement et complétés par des armatures externes au-dessus de la couche tubulaire thermoplastique également sous forme de bandes spiralées jointives, mais avec un pas plus long, c'est-à-dire un angle d'inclinaison de l'hélice inférieur, notamment de 15° à 55°.

Plus particulièrement, au moins une dite conduite flexible est enroulée au moins en partie contre et autour d'un dit fût central en spirales juxtaposées concentriques de diamètres croissants reposant sur ledit plateau tournant, ledit fût central présentant un rayon supérieur au rayon de courbure minimale de ladite conduite flexible, de préférence au moins 3 conduites flexibles sont enroulées au moins en partie sur respectivement au moins 3 dits plateaux tournants, dont au moins une conduite flexible de plus petit diamètre que les autres.

Plus particulièrement encore, dans un dispositif de transfert selon l'invention, chaque dit moyen de guidage est disposé à une hauteur différente en vis-à-vis de chaque dit plateau tournant respectivement, de manière à être apte à supporter une portion intermédiaire courbe de conduite entre une portion avale de dite conduite en position sensiblement verticale le long dudit bordé et une dite portion amont de conduite en sortie de plateau en continuité de la portion de conduite enroulée reposant sur un dit plateau tournant, ladite portion amont de conduite en sortie de plateau s'étendant sur un plan virtuel P sensiblement tangent à la surface de la face supérieure dudit plateau sur lequel est enroulé ladite portion de conduite enroulée, les différentes portions avales de conduite en position sensiblement verticale le long dudit bordé étant disposées en position décalée les unes par rapport aux autres dans une dite direction Y₂Y₂' parallèle au dit bordé en sortie desdites poulies.

Plus particulièrement encore, chaque dit moyen de guidage comprend une poulie d'axe horizontal Y₁Y₁' de première rotation sur elle-même, ladite poulie étant en outre apte à se mouvoir, de préférence librement, en deuxième rotation par rapport à un axe vertical Z₁Z₁' passant par un diamètre de la poulie, la dite première rotation sur elle-même de chaque dite poulie étant de préférence commandée par un deuxième moteur, de préférence synchronisé avec ledit premier moteur de chaque dit plateau.

Ainsi, du fait desdites deuxième rotation libre de la dite poulie autour de son axe vertical Z₁Z₁' et dite première rotation synchronisée motorisée de ladite poulie autour de son axe horizontal Y₁Y₁', une dite portion intermédiaire de conduite courbe supportée par ladite poulie peut rester en permanence dans le même plan sensiblement vertical P1, P2, P3 qu'une dite portion amont de conduite en sortie de plateau, les différents plans P1, P2, P3 étant inclinés selon un angle différent α1, α2, α3 par rapport à ladite direction Y₁Y'₁, pour arriver au niveau dudit plateau tournant en continuité et en alignement tangentiel de l'extrémité de la dernière spire de conduite enroulée permettant ainsi le trancanage optimal de la conduite au fur et à mesure de l'enroulement ou du déroulement d'une dite conduite autour dudit fût central.

On comprend qu'il s'agit du plan axial vertical (P1, P2, P3) des dites portions amont et intermédiaire de conduite qui sont situées dans un même plan sensiblement vertical et qu'en revanche le plan axial de la portion avale de conduite en position sensiblement verticale ne sera pas nécessairement situé dans ce même plan vertical.

Dans une variante de réalisation d'un support flottant selon l'invention, lesdits moyens de guidage sont constitués simplement par des goulottes.

Plus particulièrement encore, les différentes poulies sont disposée décalée les unes à coté des autres dans ladite direction Y₁Y'₁ horizontale parallèle au dit bordé, à des hauteurs différentes, le point haut de chaque poulie étant de préférence positionné sensiblement au niveau d'un plan tangent P à la face supérieure d'un dit plateau tournant.

On comprend que les différentes portions avales de conduite en position sensiblement verticale le long dudit bordé sont ainsi disposées côte à côte dans une dite direction Y₁Y₁' parallèle audit bordé en sortie des dites poulies, de préférence, chaque poulie étant réglable en hauteur par rapport à la dite partie de sa dite deuxième structure porteuse fixée audit bordé.

Plus particulièrement encore, chaque poulie est supportée par une deuxième structure porteuse disposée à l'extérieur dudit support flottant et fixée à un même bordé à une position différente dans une dite direction horizontale Y₁Y₁' parallèle au dit bordé, chaque poulie étant articulée en dite deuxième rotation d'axe vertical Z₁Z₁' par rapport une partie de sa dite deuxième structure porteuse fixée audit bordé.

Plus particulièrement encore, chaque dit plateau comprend ou coopère en sous face avec des roulettes aptes à coopérer avec ou respectivement supportées par des éléments de la dite structure porteuse et chaque dit plateau tournant comprend au niveau dudit orifice central un palier solidaire de ladite première structure porteuse apte à permettre la rotation dudit plateau en rotation relative par rapport à ladite première structure porteuse.

Selon différentes variantes de réalisation, lesdits plateaux tournants peuvent être tel que :
- au moins un dit plateau tournant présente une face supérieure plane horizontale ;
- au moins un dit plateau tournant présente une face supérieure de forme tronconique concave, de préférence d'angle au sommet γ de 160 à 178°;
- au moins un dit plateau tournant présente une face supérieure de forme tronconique convexe de préférence d'angle au sommet γ de 160 à 178.

On entend ici par forme tronconique concave ou convexe, le fait que le sommet virtuel dudit cône se trouve au dessous ou respectivement au dessus de la dite surface de forme tronconique. On comprend que l'angle α de conicité par rapport à l'horizontal sera de 1 à 10°.

Un plateau tournant de forme tronconique convexe ou concave est particulièrement utile pour purger le chargement résiduel d'une conduite flexible remplie de liquide notamment de gaz liquéfié, stockée et enroulée sur son dit plateau tournant come explicité ci-après.

Selon d'autres caractéristiques du procédé de transfert selon l'invention, ledit dispositif de stockage comprend une pluralité de plateaux tournants disposés les uns au-dessus des autres sur lesquels, lorsque toutes lesdites conduites flexibles sont suffisamment purgées, on réenroule lesdites conduites flexibles, jusqu'à ce que les deuxièmes extrémités de l'ensemble desdites conduites flexibles soient hors d'eau, avec de préférence ledit premier dispositif de connexion et de vannes arrivant juste au-dessous du plateau tournant le plus bas coopérant avec une dite conduite flexible.

On comprend que ledit premier dispositif de vannes et connexion reste en permanence fixé aux dites deuxièmes extrémités de l'ensemble desdites conduites flexibles avec lesquelles il coopère, lorsque l'on réalise le ré-enroulement desdites conduites flexibles, que ledit premier dispositif de connexion et de vannes reste hors d'eau de préférence au niveau du plateau tournant le plus bas.

Plus particulièrement encore, dans un procédé de transfert selon l'invention :
- ladite première conduite est enroulée sur un dit plateau tournant convexe tel que défini ci-dessus, et/ou
- l'une au moins des dites deuxième et troisième conduites utilisées pour transport de liquide, de préférence les deux dites deuxième et troisième conduites utilisées pour transport de liquide, est (sont) enroulée(s) sur un dit plateau tronconique de forme concave tel que défini ci-dessus.

On comprend que le liquide résiduel éventuel dans lesdites deuxième et troisième conduites peut ainsi s'écouler vers la cuve par ladite première extrémité desdites conduites en contrebas par gravité naturelle résiduelle le cas échéant lorsque la conduite est enroulée.

D'autres caractéristiques et avantages de la présente invention ressortiront mieux à la lumière de la description détaillée qui va suivre, faite de manière illustrative et non limitative, en référence aux dessins sur lesquels :

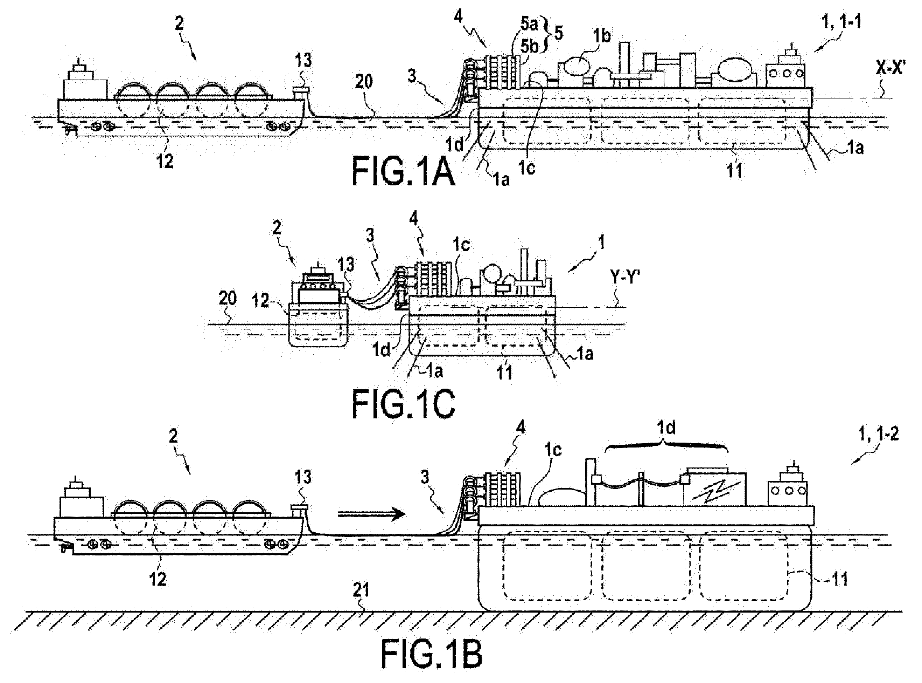

- la figure 1A est une vue de côté d'un support flottant de type FPSO 1, 1-1 de production et de stockage de GNL en phase de déchargement vers un navire, dénommé ici navire enleveur 2 de type méthanier, en configuration dite en tandem, le FPSO étant équipé d'un dispositif de stockage et de guidage de conduite flexible 4 selon l'invention,
- la figure 1B est une vue de côté d'un support 1, 1-2, de type FSRU, reposant sur fond de la mer 21, comportant une unité 1d de regazéification et de production d'électricité et un poste de transformation pour expédition du courant électrique vers la terre, en phase de déchargement depuis un navire de type méthanier, dénommé navire d'approvisionnement, en configuration dite en tandem, ledit support flottant étant équipé d'un dispositif de stockage et de guidage de conduite flexible 4 selon l'invention,

- la figure 1C est une vue de côté d'un support flottant de type FPSO 1-1 de production et de stockage de GNL en phase de déchargement vers un navire enleveur 2 de type méthanier, en configuration dite à couple, le FPSO étant équipé d'un dispositif de stockage et de guidage de conduite flexible 4 selon l'invention,

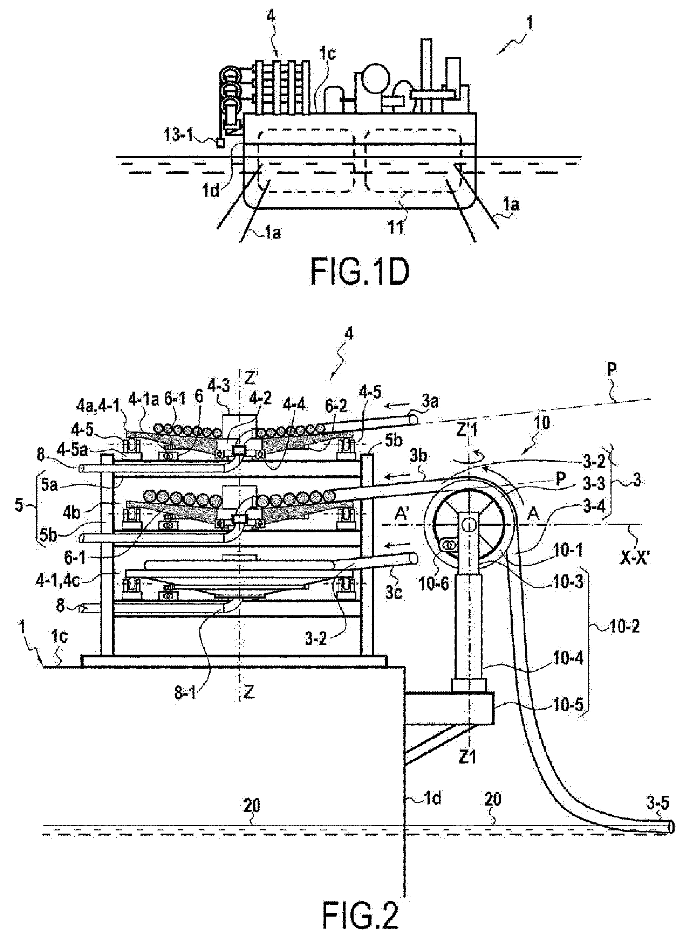

- la figure 1D est une vue de côté d'un support flottant dans lequel lesdites conduites flexibles sont réenroulées sur un dispositif de stockage et de guidage 4 avec un dit premier dispositif de connexion 13-1 hors d'eau.
- la figure 2 est une vue de côté, en coupe partielle du dispositif de stockage et de guidage 4 selon l'invention comportant trois plateaux tournants 4-1 superposés et sur laquelle figure 2 n'est représenté qu'un seul moyen de guidage 10 de conduites flexibles avec poulie en vis-à-vis du plateau tournant central afin que les différents éléments constitutifs dudit moyen de guidage soient mieux visibles,

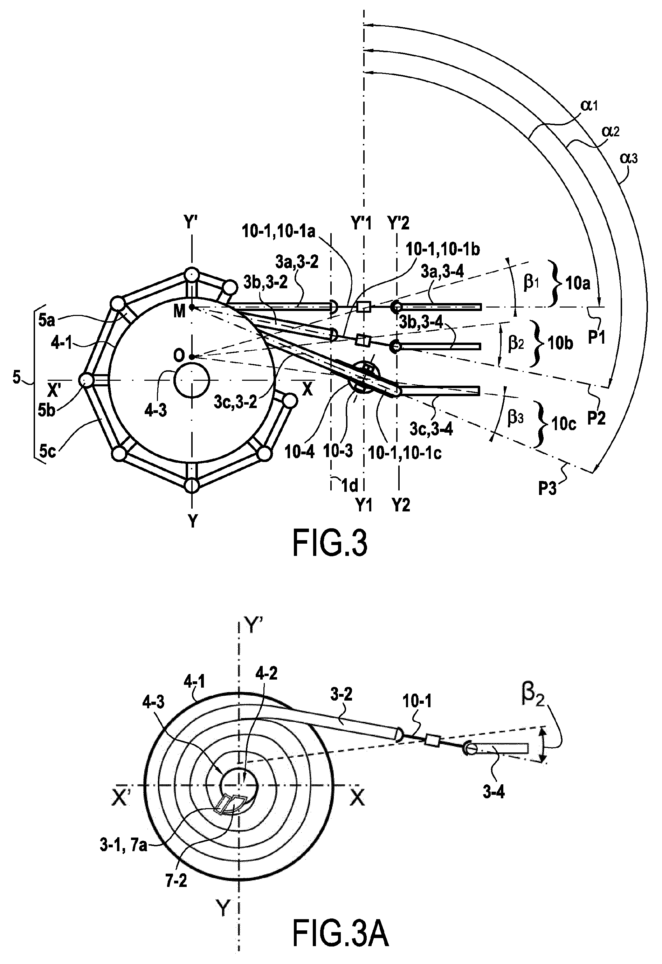

- la figure 3 est une vue de dessus du dispositif de stockage et de guidage de la figure 2 équipé de trois moyens de guidage 10-1a, 10-1b, 10-1c décalés les uns à côté des autres dans la direction horizontale Y₁Y'₁ parallèle au bordé 1d sur lequel ils sont fixés. Ledit plateau supérieur 4-1a étant représenté sans la partie de conduite qui est normalement enroulée en spirale en continuation de la portion de conduite 3-2 en sortie du plateau afin de mieux représenter les différentes inclinaisons possible des portions de conduite 3-2 en sortie de plateaux,
- la figure 3A représente en vue de dessus un plateau tournant du dispositif de la figure 3 sur lequel on a représenté une conduite flexible 3 enroulée en spirale, la poulie 10-1 étant représentée en coupe selon AA' de la figure 2,

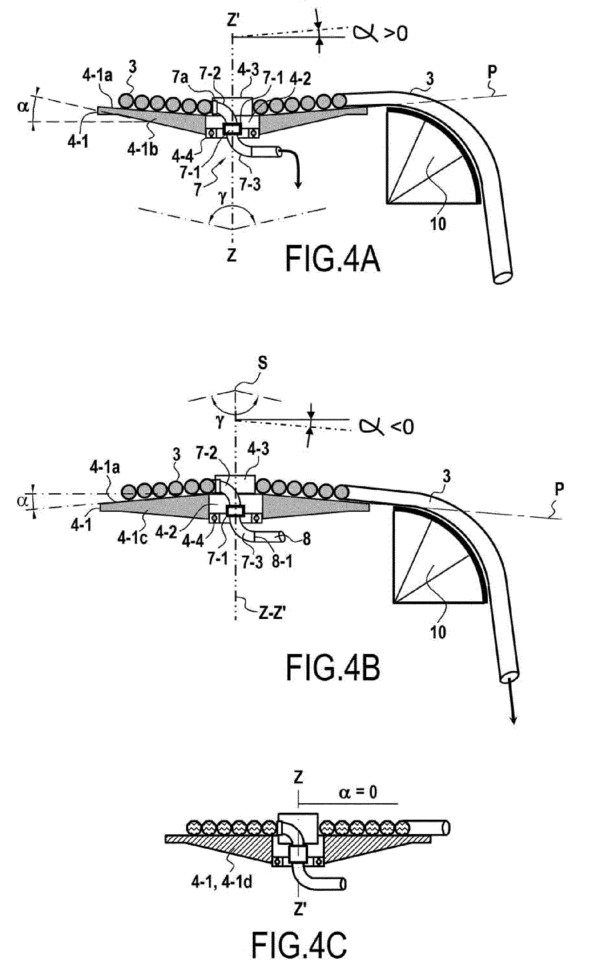

- les figures 4A, 4B et 4C sont des vues de côté d'un plateau tournant présentant une face supérieure de forme tronconique concave (figure 4A), de forme tronconique convexe (figure 4B) ou de forme plane (figure 4C), sur lequel est enroulée en spirale une conduite flexible tournée autour d'un moyen de guidage 10 en sortie dudit plateau stockage,

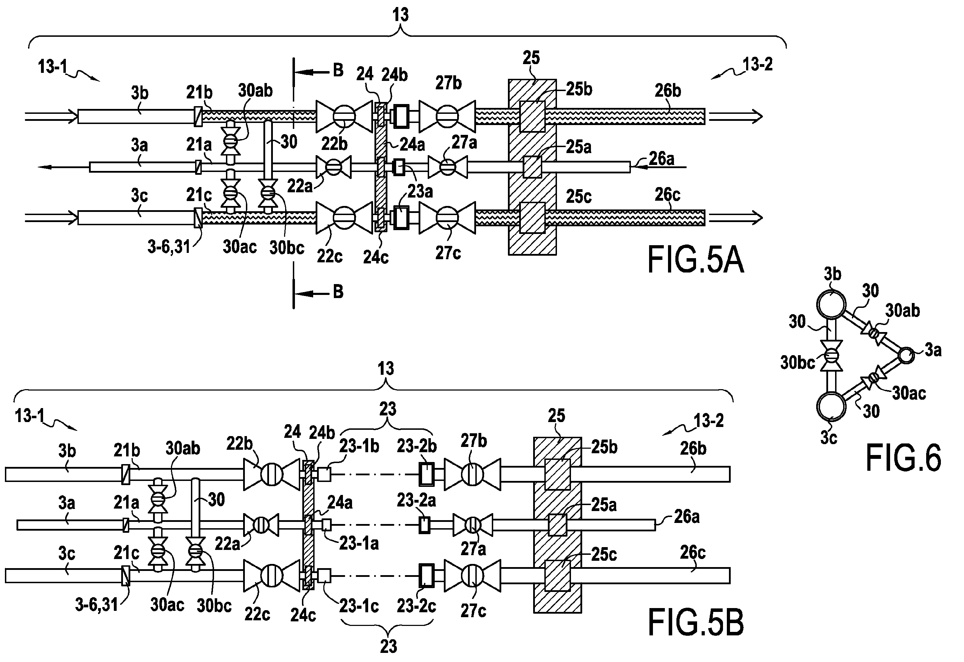

- les figures 5A et 5B sont des vues de dessus d'un dispositif de connexion et de vannes 13-1 d'un ensemble de trois conduites flexibles comprenant un premier dispositif de connexion et de vannes 13-1 à l'extrémité des trois conduites flexibles connecté à un deuxième dispositif 13-2 de connexion disposé à bord du navire enleveur 2 (figure 5A). Lesdits premier dispositif de connexion et de vannes 13-1 et deuxième dispositif de connexion et de vannes 13-2 étant déconnecté pour réaliser la purge desdites conduites (figure 5B),
- la figure 6 est une vue de face en coupe BB de la figure 5A dudit premier dispositif de connexions et de vannes.

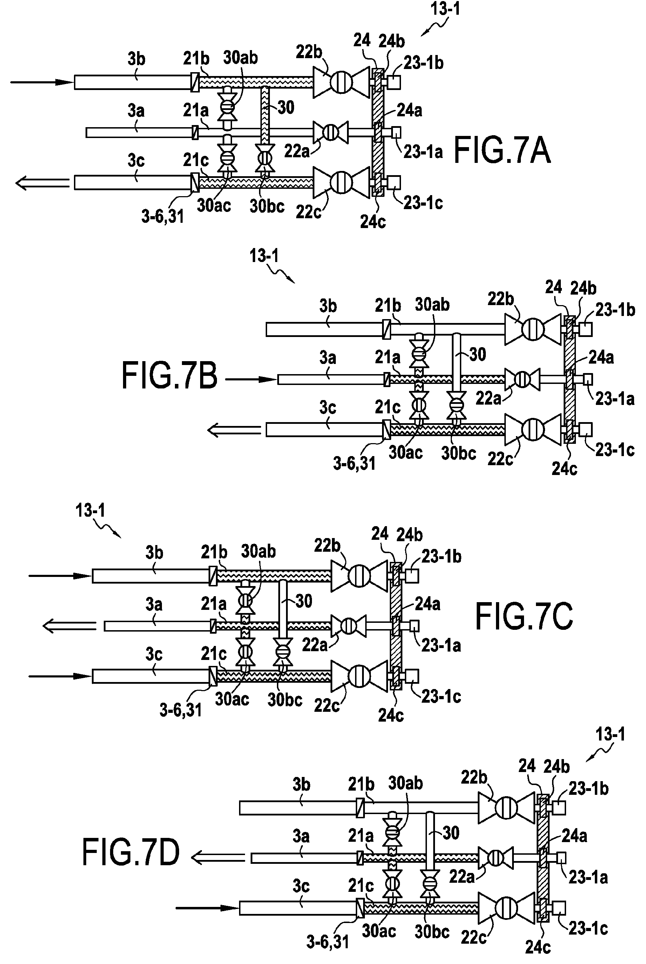

- les figures 7A, 7B, 7C et 7D sont des vues schématisant différentes possibilités de circulation de fluide entre les différentes conduites flexibles lorsque les différentes vannes du premier dispositif de connexion et de vannes 13-1 sont fermées, afin de réaliser la purge desdites conduites flexibles.

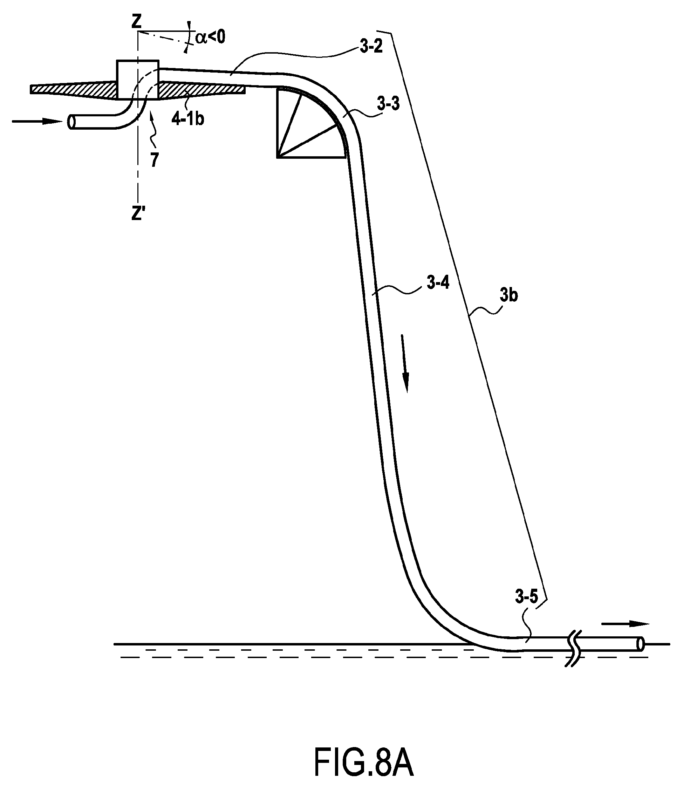

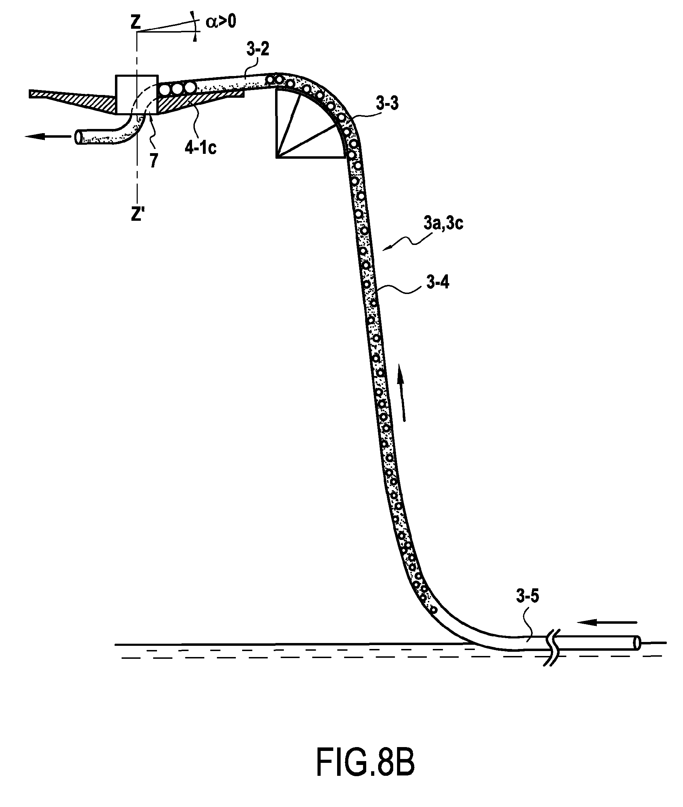

- Les figures 8A et 8B représentent une conduite flexible 3b, 3c de transfert de GNL depuis un plateau tournant de forme convexe vers le navire enleveur 2 lors de la purge de ladite conduite (figure 8A) et une conduite flexible de retour de gaz 3a coopérant avec un plateau tournant de forme concave lors de sa purge (figure 8B).

Sur la figure 1A, on a représenté en vue de côté un support flottant selon l'invention 1 de type FPSO 1-1 ancré 1a sur un champ de production de gaz en mer ouverte.

Ledit FPSO possède des équipements de traitement et de liquéfaction de gaz 1b et des premières cuves 11 de stockage de GNL intégrés au sein de la coque.

Un navire enleveur de type méthanier 2 est positionné en tandem, sensiblement dans l'axe dudit FPSO et est relié à ce dernier par un ensemble de trois conduites de flexibles 3A, 3B et 3C manutentionnées au moyen d'un dispositif 4 de stockage et de guidage de conduites flexibles 3 selon l'invention qui sera détaillé plus avant dans la description.

Lesdites conduites flexibles 3 sont des conduites flexibles flottantes du type fabriqué et commercialisé par la société Trelleborg (France) constituées essentiellement de d'armures métalliques ou composites et d'élastomères vulcanisés ou thermoplastiques.

De telles conduites destinées au transfert de déchargement de gaz liquéfié présente traditionnellement des diamètres internes de 250 à 600mm et des diamètres externes de 400 à 1000mm. Elles sont en général fabriquées en longueurs de 12m et sont assemblées entre elles au niveau de leurs extrémités équipées de brides pour obtenir des longueurs de 120 à 250m. De la même manière, les conduites de transfert en retour de gaz à l'état gazeux entre le navire enleveur 2 et le support flottant 1 comme il sera explicité ci-après, les conduites sont de même longueur totale mais avantageusement de diamètre réduit, de 150 à 400mm de diamètre intérieur.

Dans certains cas, on préfère avoir en retour de gaz des conduites identiques aux conduites de transfert de GNL, ce qui présente un avantage en termes de stock de pièces de rechange, car tous les éléments sont alors identiques.

Sur la figure 2, on a représenté en vue de côté et en coupe partielle le dispositif de stockage et de guidage 4 des conduites flexibles 3. Le dispositif de stockage est constitué d'une pluralité de 3 plateaux tournants 4-1, 4a, 4b, 4c disposés les uns au dessus des autres, de préférence coaxialement selon un même axe de rotation verticale ZZ'.

Les 3 plateaux 4-1 sont supportés par une première structure porteuse 5 reposant sur le pont le du support flottant 1 à proximité d'un bordé 1d à une de ses extrémités longitudinales.

Comme représenté sur la figure 3, la première structure porteuse 5 comporte ici 8 poteaux verticaux 5b reliés entre eux par des premières poutres horizontales 5c à différentes hauteurs et des secondes poutres horizontales 5a disposées radialement et diamétralement entre des poteaux verticaux 5b diamétralement opposés. Lesdites poutres horizontales 5a constituent des structures porteuses horizontales à trois hauteurs différentes aptes à supporter chacune un des 3 plateaux tournants 4-1.

Chacun desdits plateaux tournants présentent en son centre un orifice 4-2 ainsi qu'un palier 4-4, par exemple un roulement à galets, ledit palier étant pour partie solidaire d'une dite structure porteuse horizontale 5a et permettant une dite rotation du plateau tournant autour de son axe centrale de rotation ZZ' à l'aide d'un premier moteur 6 et de roulettes 4-5 décrites ci-après.

Chaque plateau tournant 4-1 est en effet supporté à sa périphérie et en sous face desdits plateaux par une série de roulettes 4-5, de préférence réparties de manière uniforme sur le pourtour, les supports 4-5a desdites roulettes 4-5 étant solidaire d'une dite structure porteuse horizontale 5a.

Chaque plateau tournant 4-1 est mis en rotation autour de son axe vertical ZZ' au moyen d'un premier moteur 6, de préférence hydraulique, entrainant en rotation un arbre de sortie comprenant un engrenage coopérant avec une roue dentée 6-1 solidaire dudit plateau tournant 4-1 entrainant ainsi en rotation ledit plateau tournant lorsque ledit arbre de sortie est entrainé en rotation.

Un fût central 4-3 est disposé au dessus dudit orifice 4-2 de chacun desdits plateaux tournants. Le rayon extérieur dudit fût central 4-3 est supérieur au rayon minimum de courbure de ladite conduite flexible destinée à être enroulée en spirale concentrique jointive reposant côte à côte sur ledit plateau tournant. Ledit fût central 4-3 est solidaire dudit plateau tournant 4-1.

Comme représenté sur la figure 4, un raccord à joint tournant 7, du type connu de l'homme de l'art, est installé à l'axe ZZ' de chaque dit plateau tournant 4-1.

Il est constitué d'un joint tournant proprement dit 7-1 dont la partie supérieure est équipée d'un coude supérieur 7-2 dont l'extrémité arrive contre la paroi dudit fût central 4-3. L'extrémité du coude supérieur 7-2 étant connectée de manière étanche en 7a à une première extrémité 3-1 de conduite flexible 3 destinée à être enroulée en spirale contre et autour dudit fût central 4-3 lorsque ledit plateau tournant 4-1 est entrainé en rotation. En partie basse du joint tournant 7-1, celui-ci comporte un coude inférieur 7-3 qui reste fixe lorsque ledit coude supérieur 7-2 est entrainé en rotation par rotation dudit plateau tournant 4-1. Le coude inférieur 7-3 est lui-même connecté de manière étanche à une extrémité 8-1 d'une conduite de transfert 8 dont l'autre extrémité est soit connectée à une première cuve 11 du FPSO 1 permettant ainsi d'amener du GNL provenant de ladite première cuve 11 du FPSO 1, soit est connectée à une unité de reliquéfaction à bord du FPSO permettant ainsi de renvoyer du gaz provenant dudit navire enleveur 2 vers ladite unité de reliquéfaction.

Les différentes conduites de transfert 8 passent toutes à l'intérieur des orifices centraux 4-2 respectifs des différents plateaux 4-1.

Chaque conduite flexible 3, 3a-3b-3c est guidée par un moyen de guidage 10 dont un seul est représenté sur la figure 2, chaque moyen de guidage 10 comportant une poulie 10-1 disposée selon un plan axial sensiblement vertical et apte à tourner sur elle-même en première rotation d'axe horizontal Y₁Y₁'.

La poulie 10-1 présente un rayon supérieur au rayon de courbure minimal de ladite conduite flexible 3 destinée à être tournée autour de ladite poulie.

Les dites poulies 10-1, 10-1a, 10-1b, 10-1c sont disposées à proximité et en vis-à-vis de chacun des dits plateaux tournants 4-1 de telle sorte que la gorge de ladite poulie à son point le plus haut arrive sensiblement au niveau d'un plan virtuel P tangent à la face supérieure 4-1a, plan virtuel P sur lequel repose la portion de conduite 3-2 en sortie dudit plateau tournant.

En d'autres termes, la génératrice de la surface de la face supérieure 4-1a de révolution dudit plateau tournant circulaire 4-1 est tangente à la gorge de ladite poulie à son point le plus haut.

De cette manière, la portion de conduite flexible 3-2 en sortie dudit plateau 4-1 c'est-à-dire en continuité de la dernière spire enroulée sur ledit plateau 4-1 sera plus parfaitement guidée lors des opérations d'enroulement et de déroulement de ladite conduite lors de la rotation dudit plateau 4-1 et de ladite poulie 10-1 autour de son axe horizontal X₁X'₁.

Chaque poulie 10-1 est solidaire d'une deuxième structure porteuse 10-2 comportant un support vertical 10-3 se terminant à son sommet par un étrier supportant le moyeu horizontal disposé selon l'axe de première rotation sur elle-même Y₁Y'₁ pour la poulie 1a de la figure 3, ledit support vertical 10-3 étant articulé en seconde rotation selon son axe vertical Z₁Z'₁ au sommet d'un pylône fixe 10-4 reposant sur une structure 10-5 elle-même solidaire de la coque du FPSO 1 au niveau dudit bordé 1d. Du fait que ledit support vertical 10-3 peut être articulé librement en rotation selon son axe vertical Z₁Z'₁, ladite poulie 10-1 est apte à être articulée en deuxième rotation selon ledit axe vertical Z₁Z'₁.

D'autre part, le support vertical 10-3 supportant la poulie 10-1 est apte à être déplacé en hauteur pour bien ajuster la position du sommet de la poulie par rapport au plan tangent à la face supérieure du plateau 4-1 en vis-à-vis duquel elle est disposée.

Une telle seconde rotation selon l'axe Z₁Z'₁ de ladite poulie 10-1 interviendra comme représentée sur la figure 3 au fur et à mesure de l'éloignement par rapport au centre du plateau du dernier point de contact de la dernière spire de la conduite enroulée sur ledit plateau, entre deux points limite O et M, O étant le point le plus proche du fût 4-3 (conduite entièrement déroulée) et M étant le point le plus proche de la périphérie du plateau (conduite totalement enroulée) comme représenté sur la figure 3.

Sur la même figure 3, les 3 poulies 10-1 : 10-1a, 10-1b et 10-1c sont décalées les unes à côté des autres dans la direction Y₁Y'₁ horizontale parallèle au bordé 1d. D'autre part, les plans axiaux sensiblement verticaux P1, P2, P3 des 3 poulies 10-1a, 10-1b et respectivement 10-1c peuvent présenter une inclinaison variable α1, α2, α3 respectivement par rapport à ladite direction Y₁Y'₁. En effet, lesdits plans sensiblement verticaux axiaux P1, P2 et P3 des 3 poulies peuvent tourner selon une dite deuxième rotation d'un angle β₁, β₂ ou respectivement β₃ entre :
- une première position limite dans laquelle la portion de conduite 3-2 en sortie dudit plateau 4-1 rejoignant l'entrée de ladite poulie 10-1, arrive au niveau d'une dernière spire enroulée en périphérie dudit plateau 4-1 en M,
- une deuxième position limite de dite deuxième rotation de chacune des poulies 10-1 dans laquelle la portion de conduite 3-2 en sortie de plateau arrive au niveau du point O correspondant à la position de ladite première extrémité 3-1 de conduite flexible à proximité du fût central 4-3.

Les dits plans axiaux P1, P2, P3 des trois poulies correspondent également aux plans axiaux sensiblement verticaux des trois portions de conduite amont s'étendant entre chacun desdits plateaux et respectivement chacune desdites poulies.

Chaque poulie 10-1 est de préférence motorisée par un deuxième moteur 10-6, de préférence hydraulique, coopérant avec une couronne dentée, non représentée, solidaire de ladite poulie et permettant d'entrainer en dite première rotation sur elle-même autour de son dit axe horizontal Y₁Y'₁ chacune desdites poulies 10-1.

Du fait que les différentes poulies 10-1 sont disposées à une altitude différente correspondant à celle dudit plateau 4-1 qu'elle dessert d'une part et que d'autre part lesdites poulies 10-1 sont disposées les unes à côté des autres de manière décalée dans la direction Y₁Y'₁, en dépit des angles de deuxième rotation α₁, α₂, α₃ de chacune des 3 poulies 10-1a, 10-1b, 10-1c, lesdites poulies ne risquent pas d'interférer les unes avec les autres.

Comme représenté sur la figure 2, les portions intermédiaires courbes 3-3 de conduite flexible 3 tournée autour de la poulie 10-1 se poursuivent par une portion de conduite avale 3-4 en position sensiblement verticale rejoignant la surface 20 de la mer ou elle flotte sur une partie 3-5 de leur longueur en direction du navire 2.

Comme représenté sur la figure 3, les portions avales verticales 3-4 des différentes conduites 3, 3a, 3b, 3c sont décalées dans une direction Y₁Y'₁ mais restent selon des plans axiaux sensiblement verticaux et sensiblement parallèles en dépit desdites deuxième rotation selon leur axe Z₁Z'₁ desdites poulies 10-1a, 10-1b, 10-1c.

Sur la figure 1C, on a représenté une variante de réalisation dans lesquelles le méthanier 2 est disposé à couple du support flottant 1, dans ce mode de réalisation le support flottant 1-1 et le navire 2 sont disposés parallèlement côte à côte le long de leurs bordés longitudinaux dans leurs directions longitudinales XX' et les conduites flexibles 3 reliant le dispositif 4 à bord du support 1-2 vers le navire 2 sont disposés au dessus du niveau de la mer 20. Plus particulièrement, les conduites flexibles 3 adoptent une configuration en forme de chainette au dessus du niveau de la mer 20 depuis les sorties de poulies 10-1 au niveau des dispositifs de stockage et de guidage 4 du support flottant 1 jusqu'au dispositif de vanne commun 13 sur le méthanier navire enleveur 2.

A titre illustratif, un plateau 4-1 présente un diamètre d'environ 20 m. La hauteur du dispositif de stockage 4, c'est-à-dire la hauteur des différents poteaux 5b est d'environ 15 à 20 m pour 3 plateaux 4-1 espacés en hauteur de 4 à 5 m des uns des autres. Un fût central 4-3 présentera typiquement un diamètre de 5 à 8 m.

Un tel dispositif 4 est particulièrement approprié pour recevoir des conduites flexibles de diamètre de 120 à 600mm et de longueur de 120 à 250m.

Chacun desdits plateaux tournant 4-1 peut être mis en rotation autour de son axe ZZ' indépendamment l'un de l'autre. Il en va de même de la motorisation en dite première rotation desdites poulies 10-1. Ainsi, il est possible de régler la tension et la longueur de chacune des dites conduites flexibles 3a, 3b et 3c indépendamment l'une de l'autre de sorte que lesdites conduites flexibles s'étendant entre les portions verticales 3-4 en sortie des poulies 10-1 et un dispositif de vanne commun 13 aussi dénommé dispositif de connexion et de purge, disposé à bord du navire enleveur 2, auquel sont reliées les différentes deuxièmes extrémités des différentes conduites flexibles 3a, 3b, 3c restent sensiblement égales pendant toutes les opérations d'enroulement et déroulement des dites conduites flexibles. En effet, les diamètres respectifs de chacune des dites conduites flexibles étant en général différents, il faut un nombre de tours de plateau tournant différents à chacune des dites conduites flexibles 3a, 3b et 3c pour stocker une même longueur de conduite flexible.

Une fois les conduites ré-enroulées sur leur plateau tournant 4-1, la mise en oeuvre d'un plateau tournant de face supérieure 4-1a de forme tronconique concave 4-1b ou de forme tronconique convexe 4-1c comme représenté sur les figures 4A et respectivement 4B est avantageux pour purger complètement le GNL résiduel au sein de ladite conduite enroulée ayant permis au transfert de GNL depuis le support flottant 1 vers le méthanier 2 en fonction des conditions de mise en oeuvre desdites conduites lors de leur purge tel que décrit ci-après.

Les conduites flexibles 3b, 3c véhiculant le gaz liquéfié GNL stockées dans une première cuve 11 du support 1 vers le navire 2 présentent un très grand diamètre de manière à optimiser le débit de transfert de GNL, alors que le gaz en retour peut être véhiculé dans une seule conduite, en général de diamètre plus faible, car les pertes de charges sont considérablement moins importantes pour le gaz que pour le GNL.

On rappelle que le gaz naturel liquéfié GNL est constitué essentiellement de méthane liquide à -165°C, et que les navires enleveurs sont constitués de méthaniers c'est-à-dire des navires transportant du gaz GNL et dont les cuves lorsqu'elles sont vides sont en fait remplies de méthane gazeux, plus éventuellement de l'azote, provenant de la regazéification de GNL. La mise en oeuvre de ces conduites de retour de gaz vise d'une part à évacuer le ciel de gaz des deuxièmes cuves au fur et à mesure de leur remplissage par le GNL provenant des premières cuves d'une part et d'autre part du gaz GNL regazéifié lors de son transfert du fait de son réchauffement relatif. Une fois retourné sur le support 1, le gaz est reliquéfié en GNL.

On décrit ci-après le dispositif de connexion et de vannes 13 ainsi que le procédé de purge des conduites flexibles avant que celles-ci ne soient ré-enroulées sur leur plateau tournant. Cette purge est nécessaire d'une part pour alléger les conduites flexibles et faciliter leur ré-enroulement mais également pour éviter d'endommager lesdites conduites flexibles lors de leur ré-enroulement sur lesdits plateaux tournants, endommagements qui pourraient intervenir compte tenu de leur poids excessif à l'état rempli de liquide, et de la présence de glace d'eau de mer à leur surface ou au niveau des éléments de connexion.

Le dispositif de connexion et de vannes 13 représenté sur les figures 5A, 5B et 6 comprend :
a) un premier dispositif 13-1 de vannes et de connexions disposées à l'extrémité desdites conduites flexibles 3a, 3b, 3c, comprenant :
   i. trois premières portions de conduite rigide 21a, 21b, 21c maintenues en position relative fixe les unes par rapport aux autres parallèlement,
   ii. chaque dite première portion de conduite rigide 21a, 21b, 21c comprenant :
      ▪ à une première extrémité un premier élément de raccordement de conduite 23-1a, 23-1b, 23-1c, constitué d'une partie mâle ou femelle d'un connecteur automatique,
      ▪ à leur deuxième extrémité 3-6 une bride d'assemblage 31 assemblée à ladite deuxième extrémité 3-6 de chaque dite conduite flexible 3a, 3b, 3c,
      ▪ entre les deux extrémités de chaque dite première portion de conduite rigide, chacune desdites premières portions de conduite rigide comprend deux dérivations 30 de communication comprenant chacune une première vanne de communication 30-ab, 30-ac, 30bc, ladite dérivation 30 permettant la communication de chaque dite première portion de conduite rigide avec une des deux autres premières portions de conduites rigides dudit premier dispositif 13-1,
      ▪ une première vanne de connexion 22a, 22b, 22c située entre ledit premier élément de raccordement 23-1a, 23-1b, 23-1c et ladite dérivation 30 la plus proche de ladite première extrémité dudit premier dispositif 13-1, et
b) un deuxième dispositif de connexion et de vannes 13-2 disposé à bord dudit navire enleveur 2 comprenant :
   ▪ trois deuxièmes portions de conduites rigides 26a, 26b, 26c maintenues en position relative fixe les unes par rapport aux autres parallèlement,
   ▪ chaque dite deuxième portion de conduite rigide 26a, 26b, 26d communiquant à une de ses extrémités avec une dite deuxième cuve 12 du navire 2 et comprenant à son autre extrémité un premier élément de raccordement complémentaire de conduite 23-2a, 23-2b, 23-2c, lesdits premiers éléments de raccordement complémentaires étant constitués de partie femelle et/ou respectivement mâle de connecteurs automatiques, c'est-à-dire complémentaires d'un dit premier élément de raccordement pour permettre précisément le raccordement 23 entre lesdits premier dispositif 13-1 et deuxième dispositif 13-2,
   ▪ chaque dite deuxième portion de conduite rigide comprenant en outre une deuxième vanne de connexion 27a, 27b, 27c. L'ensemble desdites premières portions de conduites rigides sont maintenues parallèlement entre elles par un premier support rigide 24 auquel elles sont solidarisées 24a, 24b, 24c. De même l'ensemble desdites deuxièmes portions de conduites rigides 26a, 26b, 26c sont maintenues parallèlement entre elles par un deuxième support rigide 25 auquel elles sont solidarisées en 25a, 25b, 25c.

Avantageusement, les différentes vannes sont des vannes à boisseau sphérique ou des vannes papillon.

Du fait que l'ensemble desdits premiers éléments de raccordement sont maintenues fixement à distance constante des uns des autres grâce au dit premier support 24 auquel ils sont solidarisés en 24a, 24b, 24c et que lesdits premiers éléments de raccordement complémentaires sont également maintenus fixement à distance constante les uns des autres et identique de la distance séparant lesdits premiers éléments de raccordement entre eux. La connexion entre lesdits premier dispositif 13-1 et deuxième dispositif 13-2 peut se faire de manière automatique par des actionneurs non représentés commandés à distance, et en une seule séquence.

Sur la figure 5B on a représenté en vue en plan, les connecteurs en phase d'approche, avant connexion, toutes les vannes 22a, 22b, 22c des dispositifs 13-1 et 13-2 étant fermées.

Sur la figure 5A, les connecteurs automatiques 23-1/23-2 sont verrouillés de manière étanche et les vannes 22a-22b-22c ainsi que les vannes 27a-27b-27c sont en position ouverte, autorisant ainsi le passage de la gauche vers la droite du GNL dans les deux conduites 3b et 3c depuis le support 1 vers le navire enleveur 2, et le passage du gaz méthane en retour, de la droite vers la gauche, dans la conduite centrale 3a depuis le navire enleveur 2 vers le FPSO1.

Pour la clarté des explications en référence aux figures 5A-5B, 7A-7B-7C-7D et 8A-8B, les transferts de GNL sont représentés par une flèche à double trait, et les transferts de gaz sont représentés par une flèche à simple trait, la longueur de ladite flèche étant proportionnelle au débit dans la conduite respective.

Le premier dispositif de vannes 13-1 et muni d'une troisième série de vannes de communication entre lesdites premières portions de conduites 21a-21b-21c disposées comme suit :
- une vanne 30ac relie les premières portions de conduites 21a et 21c ;
- une vanne 30ab relie les premières portions de conduites 21a et 21b ;
- une vanne 30bc relie les premières portions de conduites 21b et 21c.

Lors des opérations de transfert de GNL vers le navire enleveur 2, les trois dites vannes 30ab, 30ac et 30bc sont en position fermée comme représenté sur la figure 5A.

De manière à ne pas laisser les conduites flexibles 3a, 3b, 3c flotter sur la mer entre deux transferts de GNL, ce qui peut représenter une durée de plusieurs semaines, on ré-enroule les conduites flexibles sur leur plateaux tournants 4-1 après les avoir, de préférence, purgées de la manière suivante :
- on ferme les vannes 22a-22b-22c du premier dispositif de vannes commun 13-1, ainsi que les vannes 27a, 27b, 27c du second dispositif de vannes commun 13-2 à bord du navire enleveur 2, puis
- on déconnecte les dits éléments de raccordement 23 des premier et deuxième dispositifs de vannes 13-1 et 13-2, puis

- on largue les conduites flexibles 3a, 3b, 3c équipées de leur premier dispositif de connexion 13-1, lesquelles conduites flexibles flottent alors à la surface de l'eau 20, puis
- on ouvre une vanne de communication 30bc entre les deux portions de premières conduites rigides 21b, 21c communicant avec les conduites flexibles 3b, respectivement 3c comme représenté sur la figure 7A, puis
- on pressurise depuis le FPSO 1 une première conduite, par exemple la conduite 3b à l'aide de gaz, en général du méthane ou un mélange azote-méthane de manière à pousser le GNL, à une pression P,
- la pression du gaz pousse le GNL dans ladite conduite 3b et le plan de séparation des phases liquide-gaz descend progressivement dans ladite conduite 3d alors que le GNL remonte vers le FPSO par la seconde conduite 3c. Lorsque ledit plan de séparation atteint la partie 3-5 de conduite au niveau de la mer, la conduite flexible 3b est alors sensiblement horizontale et le gaz continue à pousser, mais il se forme alors un mélange diphasique sous pression qui se dirige vers le premier dispositif de vannes 13-1, puis franchit ladite vanne 30bc et s'en retourne vers le FPSO à travers la conduite flexible 3c. Le mélange diphasique comporte des bulles de petit diamètre au niveau de la surface de la mer, mais dès qu'elles atteignent la portion verticale 3-4 de ladite conduite 3c, du fait que la pression hydrostatique diminue au fur et à mesure de la remontée vers le pont du FPSO, les bulles grossissent et la densité apparente du mélange diminue, ce qui accélère d'autant la vitesse de la colonne montante diphasique, améliorant de ce fait l'entraînement de la phase liquide, puis
- lorsque les parties horizontales 3-5 des deux conduites flexibles 3b et 3c sont sensiblement vidées, c'est à dire sont sensiblement remplies de gaz, on accélère le débit de gaz depuis le FPSO dans la conduite 3b de manière à augmenter radicalement la perturbation de l'écoulement diphasique dans la portion sensiblement verticale 3-4 de la deuxième conduite 3c, ce qui a pour effet d'entraîner de manière optimale les particules de GNL, permettant de vider au moins 85%, en pratique de 85 à 95%, du volume interne des deux conduites 3b-3c.

Plus particulièrement, en général la conduite 3b est vide mais il reste du liquide dans la conduite 3c à raison de 10 à 20% du volume interne de la conduite 3c, notamment dans sa portion sensiblement verticale 3-4 comme représenté figure 8B.

Le processus de purge décrit ci-dessus en liaison avec la figure 7A est relativement rapide ainsi pour des conduites de 100 à 150 m la purge peut être opérée pour une durée d'une 1/2 à 1 heure alors qu'il faudrait plus de 24 heures pour que le GNL contenu dans les conduites se réchauffe et se gazéifie.

Dans les figures 7B et 7C, on a représenté un mode de purge plus complet des conduites flexibles 3b et 3c dans lequel on purge une première conduite flexible 3c, en injectant le gaz par la conduite de retour de gaz 3a. A cet effet, on ouvre la vanne 30ac, les vannes 30ab et 30bc étant fermées, comme représenté sur la figure 7B. On arrête la purge lorsque l'essentiel du GNL, c'est à dire au moins 85% du GNL de la conduite 3C aura été récupéré à bord du FPSO. Puis on ferme la vanne 30ac et on ouvre la vanne 30ab, ce qui a pour effet de purger la deuxième conduite flexible 3b de la même manière, c'est à dire jusqu'à au moins 85% du GNL de la conduite 3b ait été récupéré à bord du FPSO. Enfin, comme représenté sur la figure 7C on inverse le sens d'injection du gaz que l'on injecte directement dans les deux conduites flexibles 3b et 3c, le GNL remontant alors par la conduite 3a. Cette disposition présente un grand avantage dans le cas où ladite conduite de retour de gaz 3a est de plus petit diamètre. En effet, pour faire remonter le mélange diphasique dans la partie verticale 3-4 de conduite 3a, le débit de gaz dans les conduites 3b et 3c nécessaire est considérablement plus faible que dans le cas précédemment décrit en référence à la figure 5A où les deux conduites flexibles 3b et 3c sont en général de même diamètre de manière à optimiser le débit de transfert de GNL.

Pour assurer une vidange optimale de la partie verticale ascendante de conduite, il convient de créer une vitesse de gaz de purge supérieure à 1.5m/s, de préférence supérieure à 3m/s, de préférence encore supérieure à 5m/s. Ainsi, en considérant une conduite de diamètre réduit, le débit de gaz nécessaire pour obtenir cette vitesse décroît comme le carré du rapport des diamètres, ce qui illustre le caractère avantageux de disposer d'une conduite de retour de gaz de plus petit diamètre.

Pour améliorer encore cette phase de purge des conduites 3b et 3c, on procédera avantageusement de manière séquentielle comme représenté figure 7D en ce qui concerne la purge complète de la conduite 3c en fermant la vanne 30ab pour finaliser la purge de la conduite flexible 3c, puis en ouvrant cette même vanne 30ab et en fermant la vanne 30ac pour finaliser la purge de la conduite flexible 3c en injectant du gaz dans la conduite 3c pour évacuer le GNL résiduel par la conduite 3a.

Sur la figure 8A, on a représenté en vue de côté la conduite flexible 3b depuis son plateau de stockage jusqu'au niveau de la mer. Le plateau de stockage convexe 4-1b présente une face supérieure tronconique convexe avec un angle α négatif, ce qui est avantageux pour la phase de purge des conduites flexibles, car dans la description de l'invention en référence à la figure 7A, c'est par cette conduite que le gaz de purge est injecté et de par la conicité du plateau de stockage, la conduite se vide naturellement vers le bas.

Sur la figure 8B, on a représenté en vue de côté la conduite flexible 3b depuis son plateau de stockage jusqu'au niveau de la mer. Le plateau de stockage concave 4-1c présente une face supérieur tronconique concave avec un angle α positif, ce qui est avantageux pour la phase de purge des conduites flexibles, car dans la description de l'invention en référence aux figures 7A et 7B, c'est par cette conduite que le mélange diphasique remonte vers le FPSO, et de par la conicité du plateau de stockage, la conduite stockée en spirale sur ledit plateau conique se vide naturellement vers le joint tournant 7 situé à l'axe ZZ' du plateau. Sur cette même figure 8B, on a représenté ladite conduite quasiment vide dans sa partie horizontale 3-5, le mélange diphasique dans la partie sensiblement verticale 3-4 présentant des bulles de petit diamètre en partie basse et de diamètres croissants au fur et à mesure de l'ascension vers le plateau de stockage, du mélange dans la conduite.

Pour une hauteur de partie 3-4 de conduite de 30 à 35 m correspondant à un différentiel de pression de 1.5 à 2 bars, en partie basse se représenteront un diamètre de 5 à 10mm et en partie haute, du fait du différentiel de pression, un diamètre beaucoup plus important de plusieurs centimètres ou décimètres, ce qui a pour effet de réduire la densité volumique du mélange diphasique dans toute la colonne fluide et favorise donc son entrainement et évacuation au niveau du plateau tournant : - ce phénomène est connu sous le nom anglo-saxon de « gas-lift ».

Dans le mode de purge décrit en référence aux figures 7C et 7D, le plateau de stockage de la conduite de retour gaz (figure 7C) 3a (figure 7D) sera avantageusement de type conique concave avec un angle α positif.

Dans le cas où la conduite de retour de gaz présente un diamètre interne plus petit que celui des conduites de GNL, le procédé préféré de purge comprendra les deux étapes de purge suivantes :
- première étape de purge d'une conduite 3b par injection de gaz dans la conduite 3b conduisant à une purge complète de la conduite 3b mais une purge partielle seulement de la conduite 3c compte tenu du gaz GNL résiduel notamment dans la partie 3-4 de la conduite 3c dans un mode de mise en oeuvre des différentes vannes tel que décrit dans la figure 7A. Au terme de cette première étape, la conduite 3c retient encore environ 15% de son volume interne rempli de GNL.
- puis on ferme la vanne 30bc et on ouvre la vanne 30ac,
- la deuxième étape de purge est réalisée par injection de gaz dans la conduite 3c et évacuation par la conduite de retour de gaz 3a de plus petit diamètre en mettant en oeuvre les différentes vannes comme décrit sur la figure 7C. Du fait que l'évacuation se fait par une conduite 3a de plus petit diamètre, le débit de gaz nécessaire dans la conduite 3c est considérablement réduit pour obtenir la vitesse optimale du fluide diphasique correspondant à une vitesse du gaz supérieure à 1.5m/s, de préférence supérieure à 3m/s, de préférence encore supérieure à 5m/s. Du fait que la section de la conduite 3a soit plus faible, le transfert de liquide se fait plus lentement mais la purge s'en trouve radicalement améliorée en termes de pourcentage ultime de purge de liquide diphasique et de durée globale.

Après purge des trois conduites 3a, 3b, 3c, on les ré-enroule sur leurs plateaux tournants respectifs jusqu'à ce que ledit premier dispositif de connexion 13-1 arrive au dessus du niveau de l'eau particulièrement sensiblement jusqu'en dessous du plateau tournant le plus bas de celle des conduites flexibles réunies par le dispositif 13-1 comme représenté sur la figure 1D, le premier dispositif de connexion 13-1 pouvant ainsi rester à demeure à ladite deuxième extrémité 3-6 desdites conduites 3a, 3b, 3c réunies par ledit premier dispositif 13-1.

A titre d'exemple, un dispositif de transfert selon l'invention comporte :
- deux conduites flexibles de GNL de diamètre interne 500mm et de diamètre externe 900mm, chacune des conduites mesure 216m et est constituée de 18 longueurs identiques de 12m chacune, assemblée par brides, pesant 300kg/m à l'état vide,
- une conduite flexible de retour de gaz de diamètre interne 250mm et de diamètre externe 400mm, chacune des conduites mesure 216m et est constituée de 18 longueurs identiques de 12m chacune, assemblée par brides, pesant 125kg/m à l'état vide,
- un dispositif de connexion et de vannes 13 équipé de vannes 22 à boisseaux sphériques de diamètre interne 500mm pour le GNL et de 250mm pour le retour de gaz, les vannes 30ab-30ac-30bc étant des vannes papillon de diamètre de passage 250mm, pesant environ 20 tonnes,
- de trois plateaux de stockage 4 motorisés de 23m de diamètre externe et de diamètre de fût 5m, de trois poulies motorisées de diamètre de gorge 5m et de leur structures de supportage, l'ensemble pesant environ 1000 tonnes.

La procédure de purge des conduites effectuée avec une vitesse de gaz de 4m/s dans ces conditions représente une durée globale de 30 à 45 minutes pour atteindre un reliquat global de GNL inférieur à 1% du volume global d'une conduite, ce qui représente environ 425 litres de GNL résiduel qui produiront alors 250m³ de méthane gazeux qui seront ainsi ultérieurement reliquéfiés à bord du FPSO.

## Revendications

1. Dispositif de transfert de fluide apte à être disposé depuis un support (1) installé en mer, de manière fixe (1-2) ou flottant (1-1), entre un dit support et un navire, de préférence de type méthanier (2), disposé à couple ou en tandem à côté dudit support (1), ledit dispositif de transfert comprenant une pluralité de n conduites flexibles (3a-3b,3) aptes à être stockées sur un dit support (1) à l'aide d'un dispositif de stockage de conduites flexibles (4) au niveau duquel une première extrémité (3-1) de chacune desdites conduites flexibles est apte à être fixée, lesdites conduites flexibles étant aptes à s'étendre entre ledit support (1) et un dit navire disposé à couple ou en tandem à côté dudit support (1), **caractérisé en ce que** ledit dispositif de transfert de fluide comprend un premier dispositif de connexion et de vannes (13-1), lesdites conduites flexibles étant réunies entre elles au niveau de leur deuxièmes extrémités (3-6) par ledit premier dispositif de connexion et de vannes (13-1), ledit premier dispositif de connexion et de vannes (13-1) comprenant n premières portions de conduites, de préférence rigides (21a,21b,21c), maintenues en position relative fixe les unes par rapport aux autres, de préférence parallèlement, n étant un nombre entier au moins égal à 3, chaque dite première portion de conduite (21a, 21b, 21c) comprenant:
- à une première extrémité un premier élément de raccordement de conduite (23-1a,23-1b,23-1c), de préférence une partie mâle ou femelle d'un connecteur automatique, et
- à sa deuxième extrémité un deuxième élément de raccordement, de préférence une bride, assemblée à la deuxième extrémité (3-6) d'une dite conduite flexible, et
- chaque dite première portion de conduite (21a,21b,21c) comprenant entre ses deux extrémités n-1 dérivations (30) permettant la communication avec respectivement une des n-1 autres dites premières portions de conduites, chaque dite dérivation (30) comprenant une première vanne de communication (30ab,30bc,30ac), et
- une première vanne de connexion (22a,22b,22c) située entre ledit premier élément de raccordement (23-1a,23-1b,23-1c) et ladite dérivation (30),
- lesdites premières portions de conduites étant de préférence maintenues parallèles par un premier support rigide (24) auquel elles sont solidarisées,
- lesdites premières vannes de communication (30ab,30ac,30bc) étant de préférence des vannes papillons et lesdites premières vannes de connexion (22a,22b,22c) étant de préférence des vannes à boisseau sphérique.

2. Dispositif selon la revendication 1, **caractérisé en ce qu'**il comprend un deuxième dispositif de connexion et de vannes (13-2) apte à être disposé à bord d'un dit navire (2), ledit premier dispositif de connexion et de vannes (13-1) étant connecté au dit deuxième dispositif de connexion et de vannes (13-2), ledit deuxième dispositif de connexion et de vannes (13-2) comprenant :
- n deuxièmes portions de conduites (26a, 26b, 26c), de préférence rigides,
- chaque dite deuxième portion de conduite (26a, 26b, 26c) communicant ou étant apte à communiquer à une de ses extrémités avec une deuxième cuve (12) à l'intérieur dudit navire de préférence de type méthanier (2) et comprenant à son autre extrémité un premier élément de raccordement complémentaire de conduite (23-2a, 23-2b, 23-2c), ledit premier élément de raccordement complémentaire étant apte à coopérer en raccordement réversible (23) avec un dit premier élément de raccordement (23-1a, 23-1b, 23-1c), ledit premier élément de raccordement complémentaire étant de préférence une partie femelle ou respectivement mâle de connecteur automatique (23-2a, 23-2b, 23-2c),
- lesdites deuxièmes portions de conduite (26a, 26b, 26c) étant maintenues en position relative fixe les unes par rapport aux autres de préférence parallèlement de façon à permettre le raccordement desdits premiers éléments de raccordement complémentaires (23-2a, 23-2b, 23-2c) avec lesdits premiers éléments de raccordements (23-1a, 23-1b, 23-1c),
- chaque dite deuxième portion de conduite (26a, 26b, 26c) comprenant une deuxième vanne de connexion (27a, 27b, 27c) apte à autoriser ou empêcher la circulation de fluide dans ladite deuxième portion de conduite vers ou provenant dudit premier élément de raccordement complémentaire lorsqu'elle est ouverte ou respectivement fermée,
- lesdites deuxièmes portions de conduite étant de préférence maintenues parallèles entre elles par un deuxième support rigide (25) auquel elles sont solidarisées,
- lesdites deuxièmes vannes de connexion (27a, 27b, 27c) étant de préférence des vannes à boisseau sphérique.

3. Dispositif selon la revendication 1 ou 2, **caractérisé en ce qu'**il comprend :
- un dit support (1), installé en mer de manière fixe (1-2) ou flottant (1-1), et un dit navire (2), de préférence de type méthanier, disposé à couple ou en tandem à côté dudit support (1), et
- un dit dispositif de stockage et de guidage (4) de conduites flexibles sur ledit support, et
- lesdites conduites flexibles fixées à leurs premières extrémités (3-1) à un dit dispositif de stockage (4), lesdites conduites flexibles s'étendant entre ledit support flottant et ledit navire.

4. Dispositif selon les revendications 2 et 3, **caractérisé en ce qu'**il comprend en outre un dit deuxième dispositif de connexion et de vannes (13-2), disposé à bord d'un dit navire (2).

5. Dispositif selon la revendication 2 ou 3, **caractérisé en ce que** lesdites conduites flexibles comprennent au moins une première conduite flexible (3b), de préférence au moins deux première et deuxième conduites flexibles (3b,3c), apte(s) à transférer du gaz liquéfié en leur sein entre ledit support flottant et au moins une deuxième cuve (12) du dit navire de préférence de type méthanier (2) et une troisième conduite flexible, de préférence de diamètre inférieur à celui des dites première et deuxième conduites au sein de laquelle du gaz correspondant au ciel de gaz de la deuxième cuve est apte à être transféré depuis une dite deuxième cuve (12) vers une première cuve (11) au sein dudit support flottant ou une unité de liquéfaction (1b) sur un dit support avant transfert vers une dite première cuve (11).

6. Dispositif selon l'une des revendications 1 à 5, **caractérisé en ce qu'**il comprend un dit support (1) installé en mer équipé en surface d'un dispositif de stockage et de guidage (4) de conduites flexibles (3, 3a-3b-3c) apte à stocker et guider une pluralité, de préférence au moins 3 dites conduites flexibles, ledit dispositif de stockage et de guidage comprenant :
- une première structure porteuse (5) reposant sur ou solidaire du pont (1c) dudit support (1) à proximité d'un bordé (1d) dudit support (1), de préférence une paroi d'une extrémité longitudinale dudit support, ladite première structure porteuse (5) supportant une pluralité de plateaux circulaires tournants (4-1) disposés les uns au dessus des autres,
- chaque dit plateau tournant (4-1, 4a, 4b, 4c) étant apte à être entrainé en rotation de façon motorisée par un premier moteur (6) selon un axe central vertical (ZZ') indépendamment les uns des autres, de préférence selon un même axe central vertical (ZZ'), chaque plateau tournant comportant un orifice central (4-2) surmonté par un fût central (4-3) contre et autour duquel une dite conduite flexible (3, 3a, 3b, 3c) peut être enroulée en spirales juxtaposées concentriques de diamètres croissants reposant sur la face supérieure (4-1a) dudit plateau, ledit orifice central (4-2) dudit plateau tournant étant équipé d'un raccord à joint tournant (7) apte à permettre le raccordement entre d'une part une première extrémité (3-1) la plus proche dudit fût central d'une conduite flexible enroulée autour dudit fût central, la dite première extrémité (3-1) de conduite étant apte à être entrainée en rotation avec ledit plateau tournant, et d'autre part une extrémité (8-1) d'une conduite de transfert (8) fixe dont l'autre extrémité est en communication avec au moins une première cuve (11) au sein dudit support (1), et
- une pluralité de moyens de guidage (10, 10a, 10b ,10c), chaque dit moyen de guidage étant apte à guider la portion de dite conduite en sortie (3-2) de respectivement chaque dit plateau tournant en continuité de la portion de conduite enroulée sur ledit plateau, de telle sorte que les différentes dites portions de conduites en sortie (3-2) des différents plateaux tournants soient disposées rectilignement, décalées à des positions différentes dans une direction Y₁Y'₁ horizontale parallèle au dit bordé, à des hauteurs différentes et pouvant adopter des inclinaisons (α1, α2, α3) de leurs plans axiaux verticaux (P1, P2, P3) différentes par rapport à ladite direction (Y₁Y₁') horizontale parallèle au dit bordé (1d).

7. Dispositif selon la revendication 6, **caractérisé en ce qu'**au moins une dite conduite flexible (3) est enroulée, au moins en partie, contre et autour d'un dit fût central (4-3) en spirales juxtaposées concentriques de diamètres croissants reposant sur ledit plateau tournant (4-1), ledit fût central présentant un rayon supérieur au rayon de courbure minimale de ladite conduite flexible, de préférence au moins 3 conduites flexibles sont enroulées, au moins en partie, sur respectivement au moins 3 dits plateaux tournants, dont au moins une conduite flexible de plus petit diamètre que les autres.

8. Dispositif selon la revendication 6 ou 7, **caractérisé en ce que** chaque dit moyen de guidage est disposé à une hauteur différente en vis-à-vis de chaque dit plateau tournant respectivement, de manière à être apte à supporter une portion intermédiaire courbe (3-3) de conduite entre une portion avale (3-4) de dite conduite en position sensiblement verticale le long dudit bordé (1d) et une dite portion amont de conduite en sortie de plateau (3-2) en continuité de la portion de conduite enroulée reposant sur un dit plateau tournant, ladite portion amont de conduite en sortie (3-2) de plateau s'étendant sur un plan virtuel (P) sensiblement tangent à la surface de la face supérieure (4-1a) dudit plateau sur lequel est enroulé ladite portion de conduite enroulée, les différentes portions avales (3-4) de conduite en position sensiblement verticale le long dudit bordé étant disposées en position décalée les unes par rapport aux autres dans une dite direction (Y₂Y₂') parallèle au dit bordé en sortie desdites poulies.

9. Dispositif selon la revendication 8, **caractérisé en ce que** :
- chaque dit moyen de guidage (10) comprend une poulie (10-1) d'axe horizontal (Y₁Y₁') de première rotation sur elle-même, ladite poulie étant en outre apte à se mouvoir, de préférence librement, en deuxième rotation par rapport à un axe vertical (Z1Z1') passant par un diamètre de la poulie, la dite première rotation sur elle-même de chaque dite poulie étant de préférence commandée par un deuxième moteur (10-6), de préférence synchronisé avec ledit premier moteur (6) de chaque dit plateau (4-1), et
- les différentes poulies (10a,10b,10c) sont disposée décalée les unes à coté des autres dans ladite direction Y₁Y'₁ horizontale parallèle au dit bordé, à des hauteurs différentes, le point haut de chaque poulie étant de préférence positionné sensiblement au niveau d'un plan tangent (P) à la face supérieure (4-1a) d'un dit plateau tournant (4-1), et
- chaque poulie est supportée par une deuxième structure porteuse (10-2) disposée à l'extérieur dudit support flottant et fixée à un même bordé (1d) à une position différente dans une dite direction horizontale (Y1Y1') parallèle au dit bordé, chaque poulie étant articulée en dite deuxième rotation d'axe vertical (Z1Z1') par rapport une partie (10-4, 10-5) de sa dite deuxième structure porteuse fixée audit bordé (1d).

10. Dispositif selon l'une des revendications 1 à 9, **caractérisé en ce que** chaque dit plateau (4-1) comprend ou coopère en sous face avec des roulettes (4-5) aptes à coopérer avec ou respectivement supportées par des éléments (5a) de la dite structure porteuse et chaque dit plateau tournant comprend au niveau dudit orifice central un palier (4-4) solidaire de ladite première structure porteuse (5) apte à permettre la rotation dudit plateau en rotation relative par rapport à ladite première structure porteuse (5).

11. Dispositif selon l'une des revendications 1 à 10, **caractérisé en ce qu'**au moins un dit plateau tournant (4-1d) présente une face supérieure (4-1a) plane horizontale.

12. Dispositif selon l'une des revendications 1 à 10, **caractérisé en ce qu'**au moins un dit plateau tournant (4-1c) présente une face supérieure de forme tronconique convexe, de préférence d'angle au sommet γ de 160 à 178°.

13. Dispositif selon l'une des revendications 1 à 10, **caractérisé en ce qu'**au moins un dit plateau tournant (4-1b) présente une face supérieure (4-1a) de forme tronconique concave de préférence d'angle au sommet γ de 160 à 178°.

14. Dispositif selon l'une des revendications 2 à 13, **caractérisé en ce qu'**il comprend un dit support (1), un dit dispositif de stockage, de préférence un dispositif de stockage et de guidage, et au moins deux dites conduites flexibles (3), de préférence au moins 3 conduites flexibles (3a,3b,3c) s'étendant entre un dit support (1) et un dit navire de préférence de type méthanier (2) disposé à couple ou en tandem à côté dudit support flottant (1), lesdites conduites flexibles (3) étant en partie au moins stockées à l'aide d'un dit dispositif de stockage (4), lesdites conduites flexibles étant équipées d'un dit premier dispositif de connexion et de vannes (13-1), connecté à un dit deuxième dispositif de connexion et de vannes (13-2) disposé ou apte à être disposé à bord d'un dit navire (2).

15. Dispositif selon la revendication 14, **caractérisé en ce que** lesdites conduites flexibles sont des conduites flottantes, flottant en surface sur une partie (3-5) au moins de la distance entre le dit support (1) et le dit navire de préférence de type méthanier (2).

16. Procédé de transfert de fluide, de préférence un produit pétrolier liquide ou gazeux, depuis un support (1) installé en mer, de manière fixe (1-2) ou flottant (1-1), de préférence entre un dit support et un navire de préférence de type méthanier (2) disposé à couple ou en tandem à côté dudit support (1), à l'aide d'un dispositif selon l'une des revendications 14 ou 15, **caractérisé en ce qu'**on réalise le transfert d'un dit produit pétrolier liquide, de préférence du gaz liquéfié GNL, dans deux dites première et deuxième conduites flexibles (3b,3c), puis on réalise la purge desdites première et deuxième conduites flexibles (3b,3c) ayant servies au transfert de produit liquide en réalisant les étapes successives suivantes dans lesquelles :
a. On ferme lesdites premières et deuxièmes vannes de connexion (22a-22b-22c,27a-27b-27c), et l'on déconnecte l'un de l'autre lesdits premier et deuxième dispositifs de connexion et de vannes (13-1, 13-2), et
b. On injecte du gaz à la première extrémité (3-1) d'une première conduite flexible (3b) depuis ledit support (1) et on ouvre au moins une dite première vanne de communication (30bc) entre ladite première conduite flexible (3b) et une deuxième conduite flexible (3c) assemblée au même dit premier dispositif de connexion et de vannes (13-1), les autres dites premières vannes de communication (30ac, 30ab) étant fermées, puis
c. On ferme ladite première vanne de communication (30bc) entre lesdites première et deuxième conduites (3b,3c) quand ladite première conduite (3b) est suffisamment vidée, de préférence sensiblement complètement vidée.

17. Procédé selon la revendication 16, **caractérisé en ce que**, après l'étape c), on purge complètement ladite deuxième conduite flexible (3c) en réalisant les étapes supplémentaires suivantes :
d. On injecte du gaz depuis le support (1) dans ladite première extrémité (3-1) de ladite deuxième conduite (3c) et on ouvre ladite première vanne de communication (3ac) entre ladite deuxième conduite (3c) et une troisième conduite flexible (3a) de plus petit diamètre que ladite deuxième conduite de telle sorte que le débit de gaz de purge soit tel que la vitesse dudit gaz soit supérieure à 1,5m/s, de préférence supérieur à 3m/s, de préférence encore supérieur à 5m/s, les autres dites premières vannes de communication (30ab, 30bc) étant fermées, et
e. On ferme ladite première vanne de communication (30ac) entre lesdites deuxième et troisième conduites (3c,3a) quand ladite deuxième conduite (3c) est suffisamment vidée, de préférence sensiblement complètement vidée.

18. Procédé selon l'une des revendications 16 ou 17, **caractérisé en ce que** ledit dispositif de stockage comprend une pluralité de plateaux tournants (4-1) disposés les uns au-dessus des autres sur lesquels, lorsque toutes lesdites conduites flexibles sont suffisamment purgées, on ré-enroule lesdites conduites flexibles, jusqu'à ce que les deuxièmes extrémités (3-6) de l'ensemble desdites conduites flexibles soient hors d'eau, avec de préférence ledit premier dispositif de connexion et de vannes (13-1) arrivant juste au dessous du plateau tournant le plus bas coopérant avec une dite conduite flexible.

19. Procédé selon la revendication 18, **caractérisé en ce que** ladite première conduite flexible (3b) est enroulée sur un dit plateau tournant convexe tel que défini dans la revendication 12.

20. Procédé selon l'une des revendications 18 ou 19, **caractérisé en ce que** l'une au moins desdites deuxième et troisième conduites (3c, 3a), de préférence les deux dites deuxième et troisième conduites (3c, 3a), utilisée(s) pour le transfert de liquide, est (sont) enroulée(s) sur un dit plateau tronconique de forme concave tel que défini dans la revendication 13.

## Patentansprüche

1. Fluidtransfervorrichtung, die geeignet ist, von einem im Meer fest (1-2) oder schwimmend (1-1) angebrachten Träger (1) aus, zwischen einem genannten Träger und einem Schiff, vorzugsweise vom Typ Flüssiggastanker (2), der gepaart oder im Tandem neben dem Träger (1) angeordnet ist, angeordnet zu werden, wobei die Transfervorrichtung eine Vielzahl von n flexiblen Leitungen (3a-3b, 3) umfasst, die geeignet sind, auf einem Träger (1) mit Hilfe einer Vorrichtung zur Lagerung von flexiblen Leitungen (4), im Bereich derer ein erstes Ende (3-1) von einer jeden der flexiblen Leitungen befestigbar ist, gelagert zu werden, wobei die flexiblen Leitungen geeignet sind, sich zwischen dem Träger (1) und einem gepaart oder im Tandem neben dem Träger (1) angeordneten Schiff zu erstrecken, **dadurch gekennzeichnet, dass** die Fluidtransfervorrichtung eine erste Verbindungs- und Ventilvorrichtung (13-1) umfasst, wobei die flexiblen Leitungen im Bereich ihrer zweiten Enden (3-6) durch die erste Verbindungs- und Ventilvorrichtung (13-1) untereinander verbunden sind, wobei die erste Verbindungs- und Ventilvorrichtung (13-1) n erste, vorzugsweise starre Leitungsabschnitte (21 a, 21 b, 21 c) umfasst, die in fester Relativposition zueinander, vorzugsweise parallel, gehalten sind, wobei n eine ganze Zahl wenigstens gleich 3 ist, wobei jeder erste Leitungsabschnitt (21 a, 21 b, 21 c) umfasst:
- an einem ersten Ende ein erstes Leitungsanschlusselement (23-1 a, 23-1 b, 23-1 c), vorzugsweise einen männlichen oder weiblichen Teil eines automatischen Verbinders, und
- an seinem zweiten Ende ein zweites Anschlusselement, vorzugsweise einen Flansch, der mit dem zweiten Ende (3-6) einer flexiblen Leitung verbunden ist, und
- wobei jeder erste Leitungsabschnitt (21 a, 21 b, 21 c) zwischen seinen beiden Enden n-1 Abzweigungen (30) umfasst, die die Verbindung mit jeweils einem der n-1 anderen ersten Leitungsabschnitte ermöglichen, wobei jede Abzweigung (30) ein erstes Verbindungsventil (30ab, 30bc, 30ac) umfasst, und
- ein erstes Anschlussventil (22a, 22b, 22c), das zwischen dem ersten Anschlusselement (23-1 a, 23-1 b, 23-1 c) und der Abzweigung (30) gelegen ist,
- wobei die ersten Leitungsabschnitte durch einen ersten starren Träger (24), mit dem sie fest verbunden sind, vorzugsweise parallel gehalten sind,
- wobei die ersten Verbindungsventile (30ab, 30ac, 30bc) vorzugsweise Schmetterlingsventile und die ersten Anschlussventile (22a, 22b, 22c) vorzugsweise Kugelventile sind.

2. Vorrichtung nach Anspruch 1, **dadurch gekennzeichnet, dass** sie eine zweite Verbindungs- und Ventilvorrichtung (13-2) umfasst, die geeignet ist, an Bord eines Schiffes (2) angeordnet zu werden, wobei die erste Verbindungs- und Ventilvorrichtung (13-1) an die zweite Verbindungs- und Ventilvorrichtung (13-2) angeschlossen ist, wobei die zweite Verbindungs- und Ventilvorrichtung (13-2) umfasst:
- n zweite, vorzugsweise starre Leitungsabschnitte (26a, 26b, 26c),
- wobei jeder zweite Leitungsabschnitt (26a, 26b, 26c) an einem seiner Enden mit einem zweiten Tank (12) innerhalb des Schiffes, vorzugsweise vom Typ Flüssiggastanker (2), in Verbindung steht oder geeignet ist, damit in Verbindung zu stehen, und an seinem anderen Ende ein erstes ergänzendes Leitungsanschlusselement (23-2a, 23-2b, 23-2c) umfasst, wobei das erste ergänzende Anschlusselement geeignet ist, mit einem ersten Anschlusselement (23-1 a, 23-1 b, 23-1 c) reversibel verbindend (23) zusammenzuwirken, wobei das erste ergänzende Anschlusselement vorzugsweise ein weiblicher bzw. ein männlicher Teil eines automatischen Verbinders (23-2a, 23-2b, 23-2c) ist,
- wobei die zweiten Leitungsabschnitte (26a, 26b, 26c) in fester Relativposition zueinander, vorzugsweise parallel, gehalten sind, um das Verbinden der ersten ergänzenden Anschlusselemente (23a-2a, 23-2b, 23-2c) mit den ersten Anschlusselementen (23-1a, 23-1 b, 23-1 c) zu ermöglichen,
- wobei jeder zweite Leitungsabschnitt (26a, 26b, 26c) ein zweites Anschlussventil (27a, 27b, 27c) umfasst, das geeignet ist, die Fluidzirkulation in dem zweiten Leitungsabschnitt in Richtung des ersten ergänzenden Anschlusselements oder von diesem kommend zuzulassen oder zu unterbinden, wenn es geöffnet bzw. geschlossen ist,
- wobei die zweiten Leitungsabschnitte durch einen zweiten starren Träger (25), mit dem sie fest verbunden sind, vorzugsweise parallel zueinander gehalten sind,
- wobei die zweiten Anschlussventile (27a, 27b, 27c) vorzugsweise Kugelventile sind.

3. Vorrichtung nach Anspruch 1 oder 2, **dadurch gekennzeichnet, dass** sie umfasst:
- einen Träger (1), der im Meer fest (1-2) oder schwimmend (1-1) angebracht ist, sowie ein Schiff (2), vorzugsweise vom Typ Flüssiggastanker, der gepaart oder im Tandem neben dem Träger (1) angeordnet ist, und
- eine Vorrichtung zum Lagern und Führen (4) von flexiblen Leitungen auf dem Träger, und
- die flexiblen Leitungen, die an ihren ersten Enden (3-1) an einer Lagervorrichtung (4) befestigt sind, wobei die flexiblen Leitungen sich zwischen dem schwimmenden Träger und dem Schiff erstrecken.

4. Vorrichtung nach den Ansprüchen 2 und 3, **dadurch gekennzeichnet, dass** sie ferner eine zweite Verbindungs- und Ventilvorrichtung (13-2), die an Bord eines Schiffes (2) angeordnet ist, umfasst.

5. Vorrichtung nach Anspruch 2 oder 3, **dadurch gekennzeichnet, dass** die flexiblen Leitungen wenigstens eine erste flexible Leitung (3b), vorzugsweise wenigstens zwei flexible Leitungen (3b, 3c), eine erste und eine zweite, umfassen, die geeignet ist (sind), in ihrem Inneren Flüssiggas zwischen dem schwimmenden Träger und wenigstens einem zweiten Tank (12) des Schiffes, vorzugsweise vom Typ Flüssiggastanker (2), zu überführen, sowie eine dritte flexible Leitung, vorzugsweise mit einem kleineren Durchmesser als die erste und die zweite Leitung, in deren Inneren Gas, das der Gasphase des zweiten Tanks entspricht, von einem zweiten Tank (12) zu einem ersten Tank (11) innerhalb des schwimmenden Trägers oder einer Verflüssigungseinheit (1 b) auf einem Träger vor Überführen zu einem ersten Tank (11) überführt werden kann.

6. Vorrichtung nach einem der Ansprüche 1 bis 5, **dadurch gekennzeichnet, dass** sie einen im Meer angebrachten Träger (1) umfasst, der an der Oberfläche mit einer Vorrichtung zum Lagern und Führen (4) von flexiblen Leitungen (3, 3a-3b-3c) ausgestattet ist, die geeignet ist, mehrere, vorzugsweise wenigstens 3 flexible Leitungen zu lagern und zu führen, wobei die Lager- und Führungsvorrichtung umfasst:
- eine erste Tragstruktur (5), die auf dem Deck (1c) des Trägers (1) in der Nähe einer Außenhaut (1 d) des Trägers (1), vorzugsweise einer Wand eines Längsendes des Trägers, aufliegt oder damit fest verbunden ist, wobei die erste Tragstruktur (5) eine Vielzahl von übereinander angeordneten runden Drehtellern (4-1) umfasst,
- wobei jeder Drehteller (4-1, 4a, 4b, 4c) geeignet ist, über einen ersten Motor (6) um eine vertikale Mittelachse (ZZ'), vorzugsweise um eine gleiche vertikale Mittelachse (ZZ'), unabhängig voneinander motorisiert drehangetrieben zu werden, wobei jeder Drehteller eine mittlere Öffnung (4-2) umfasst, über der ein mittlerer Schaft (4-3) angeordnet ist, an dem und um den eine flexible Leitung (3, 3a, 3b, 3c) in aneinander liegenden, konzentrischen Spiralen mit zunehmenden Durchmessern, welche auf der Oberseite (4-1 a) des Tellers aufliegen, aufgewickelt werden kann, wobei die mittlere Öffnung (4-2) des Drehtellers mit einem Drehkupplungsanschluss (7) ausgestattet ist, der geeignet ist, das Anschließen zwischen einerseits einem dem mittleren Schaft am nächsten gelegenen ersten Ende (3-1) einer um den mittleren Schaft gewickelten flexiblen Leitung, wobei das erste Leitungsende (3-1) geeignet ist, mit dem Drehteller drehangetrieben zu werden, und andererseits einem Ende (8-1) einer festen Transferleitung (8) zu ermöglichen, deren anderes Ende mit wenigstens einem ersten Tank (11) innerhalb des Trägers (1) in Verbindung steht, und
- eine Vielzahl von Führungsmitteln (10, 10a, 10b, 10c), wobei jedes Führungsmittel geeignet ist, den Leitungsabschnitt am Ausgang (3-2) jeweils eines jeden Drehtellers in Fortsetzung des auf den Teller aufgewickelten Leitungsabschnitts derart zu führen, dass die verschiedenen Leitungsabschnitte am Ausgang (3-2) der verschiedenen Drehteller geradlinig, in unterschiedlichen Positionen in einer zu der Außenhaut parallelen horizontalen Richtung (Y₁Y'₁) versetzt, in unterschiedlichen Höhen angeordnet sind und unterschiedliche Neigungen (α1, α2, α3) ihrer vertikalen Axialebenen (P1, P2, P3) gegenüber der zu der Außenhaut (1d) parallelen horizontalen Richtung (Y₁Y'₁) einnehmen können.

7. Vorrichtung nach Anspruch 6, **dadurch gekennzeichnet, dass** wenigstens eine flexible Leitung (3) wenigstens teilweise an einem und um einen mittleren Schaft (4-3) in aneinander liegenden, konzentrischen Spiralen mit zunehmenden Durchmessern, die auf dem Drehteller (4-1) aufliegen, aufgewickelt ist, wobei der mittlere Schaft einen Radius aufweist, der größer als der minimale Krümmungsradius der flexiblen Leitung ist, vorzugsweise wenigstens 3 flexible Leitungen wenigstens teilweise auf jeweils wenigstens 3 Drehteller gewickelt sind, von denen wenigstens eine flexible Leitung einen kleineren Durchmesser als die anderen aufweist.

8. Vorrichtung nach Anspruch 6 oder 7, **dadurch gekennzeichnet, dass** jedes Führungsmittel gegenüber eines jeden Drehtellers jeweils in einer anderen Höhe angeordnet ist, um in der Lage zu sein, einen gekrümmten Leitungszwischenabschnitt (3-3) zwischen einem stromabwärtigen Leitungsabschnitt (3-4) in im Wesentlichen vertikaler Position entlang der Außenhaut (1 d) und einem stromaufwärtigen Leitungsabschnitt am Ausgang (3-2) des Tellers in Fortsetzung des auf einem Drehteller aufliegenden, aufgewickelten Leitungsabschnitts zu tragen, wobei der stromaufwärtige Leitungsabschnitt am Ausgang (3-2) des Tellers sich auf einer virtuellen Ebene (P) erstreckt, die im Wesentlichen tangential zu der Oberfläche der Oberseite (4-1 a) des Tellers ist, auf den der aufgewickelte Leitungsabschnitt gewickelt ist, wobei die verschiedenen stromabwärtigen Leitungsabschnitte (3-4) in im Wesentlichen vertikaler Position entlang der Außenhaut in zueinander versetzter Position in einer zu der Außenhaut parallelen Richtung (Y₂Y₂') am Ausgang der Rollen angeordnet sind.

9. Vorrichtung nach Anspruch 8, **dadurch gekennzeichnet, dass**:
- jedes Führungsmittel (10) eine Rolle (10-1) mit horizontaler Achse (Y₁Y₁') einer ersten Rotation um sich selbst umfasst, wobei die Rolle ferner geeignet ist, sich in zweiter Rotation, vorzugsweise frei, um eine vertikale Achse (Z1Z1'), welche durch einen Durchmesser der Rolle verläuft, zu bewegen, wobei die erste Rotation einer jeden Rolle um sich selbst vorzugsweise durch einen zweiten Motor (10-6), der vorzugsweise mit dem ersten Motor (6) eines jeden Tellers (4-1) synchronisiert ist, gesteuert wird, und
- die verschiedenen Rollen (10a, 10b, 10c) in der zu der Außenhaut parallelen horizontalen Richtung (Y₁Y'₁) nebeneinander versetzt, in unterschiedlichen Höhen angeordnet sind, wobei der obere Punkt jeder Rolle vorzugsweise im Wesentlichen im Bereich einer Tangentialebene (P) zu der Oberseite (4-1 a) eines Drehtellers (4-1) positioniert ist, und
- jede Rolle durch eine zweite Tragstruktur (10-2) getragen ist, die außerhalb des schwimmenden Trägers angeordnet und an einer gleichen Außenhaut (1d) in einer anderen Position, in einer zu der Außenhaut parallelen horizontalen Richtung (Y₁Y₁') befestigt ist, wobei jede Rolle in zweiter Rotation mit vertikaler Achse (Z1Z1') gegenüber einem Teil (10-4, 10-5) ihrer an der Außenhaut (1 d) befestigten zweiten Tragstruktur angelenkt ist.

10. Vorrichtung nach einem der Ansprüche 1 bis 9, **dadurch gekennzeichnet, dass** jeder Teller (4-1) an der Unterseite Laufrollen (4-5), welche geeignet sind, mit Elementen (5a) der Tragstruktur zusammenzuwirken, bzw. durch diese getragen werden, umfasst oder damit zusammenwirkt, und jeder Drehteller im Bereich der mittleren Öffnung ein mit der ersten Tragstruktur (5) fest verbundenes Lager (4-4) umfasst, das geeignet ist, die Rotation des Tellers in Relativdrehung gegenüber der ersten Tragstruktur (5) zu ermöglichen.

11. Vorrichtung nach einem der Ansprüche 1 bis 10, **dadurch gekennzeichnet, dass** wenigstens ein Drehteller (4-1 d) eine ebene, horizontale Oberseite (4-1 a) aufweist.

12. Vorrichtung nach einem der Ansprüche 1 bis 10, **dadurch gekennzeichnet, dass** wenigstens ein Drehteller (4-1 c) eine kegelstumpfförmige, konvexe Oberseite, vorzugsweise mit einem Scheitelwinkel γ von 160 bis 178° aufweist.

13. Vorrichtung nach einem der Ansprüche 1 bis 10, **dadurch gekennzeichnet, dass** wenigstens ein Drehteller (4-1 b) eine kegelstumpfförmige, konkave Oberseite (4-1 a), vorzugsweise mit einem Scheitelwinkel γ von 160 bis 178° aufweist.

14. Vorrichtung nach einem der Ansprüche 2 bis 13, **dadurch gekennzeichnet, dass** sie einen Träger (1), eine Lagervorrichtung, vorzugsweise eine Lager- und Führungsvorrichtung, sowie wenigstens zwei flexible Leitungen (3), vorzugsweise wenigstens 3 flexible Leitungen (3a, 3b, 3c), die sich zwischen einem Träger (1) und einem Schiff, vorzugsweise vom Typ Flüssiggastanker (2), der gepaart oder im Tandem neben dem schwimmenden Träger (1) angeordnet ist, umfasst, wobei die flexiblen Leitungen (3) wenigstens teilweise mit Hilfe einer Lagervorrichtung (4) gelagert sind, wobei die flexiblen Leitungen mit einer ersten Verbindungs- und Ventilvorrichtung (13-1) ausgestattet sind, die an eine an Bord eines Schiffes (2) angeordnete oder anordenbare zweite Verbindungs- und Ventilvorrichtung (13-2), angeschlossen ist.

15. Vorrichtung nach Anspruch 14, **dadurch gekennzeichnet, dass** die flexiblen Leitungen schwimmende Leitungen sind, die an der Oberfläche auf wenigstens einem Teil (3-5) der Strecke zwischen dem Träger (1) und dem Schiff, vorzugsweise vom Typ Flüssiggastanker (2), schwimmen.

16. Verfahren zum Transfer eines Fluids, vorzugsweise eines flüssigen oder gasförmigen Ölproduktes, von einem im Meer fest (1-2) oder schwimmend (1-1) angebrachtem Träger (1) aus, vorzugsweise zwischen einem gennannten Träger und einem Schiff, vorzugsweise vom Typ Flüssiggastanker (2), der gepaart oder im Tandem neben dem Träger (1) angeordnet ist, mit Hilfe einer Vorrichtung nach einem der Ansprüche 14 oder 15, **dadurch gekennzeichnet, dass** der Transfer eines flüssigen Ölproduktes, vorzugsweise Flüssigerdgas LNG, in zwei flexiblen Leitungen (3b, 3c), einer ersten und einer zweiten, vollzogen wird, anschließend das Entleeren der ersten und der zweiten flexiblen Leitung (3b, 3c), die dem Transfer von flüssigem Produkt dienten, dadurch vollzogen wird, dass die folgenden aufeinanderfolgenden Schritte durchgeführt werden, bei denen:
a. die ersten und zweiten Verbindungsventile (22a-22b-22c, 27a-27b-27-c) geschlossen werden und die erste und die zweite Verbindungs- und Ventilvorrichtung (13-1, 13-2) getrennt werden, und
b. Gas an dem ersten Ende (3-1) einer ersten flexiblen Leitung (3b) von dem Träger (1) aus eingeleitet wird und wenigstens ein erstes Verbindungsventil (30bc) zwischen der ersten flexiblen Leitung (3b) und einer zweiten flexiblen Leitung (3c), die mit der gleichen ersten Verbindungs- und Ventilvorrichtung (13-1) verbunden ist, geöffnet wird, wobei die anderen ersten Verbindungsventile (30ac, 30ab) geschlossen sind, anschließend
c. das erste Verbindungsventil (30bc) zwischen der ersten und der zweiten Leitung (3b, 3c) geschlossen wird, wenn die erste Leitung (3b) ausreichend entleert ist, vorzugsweise im Wesentlichen vollkommen entleert ist.

17. Verfahren nach Anspruch 16, **dadurch gekennzeichnet, dass** nach Schritt c) die zweite flexible Leitung (3c) dadurch vollständig entleert wird, dass die folgenden zusätzlichen Schritte durchgeführt werden:
d. Gas wird von dem Träger (1) aus in das erste Ende (3-1) der zweiten Leitung (3c) eingeleitet, und das erste Verbindungsventil (3ac) zwischen der zweiten Leitung (3c) und einer dritten flexiblen Leitung (3a) mit kleinerem Durchmesser als die zweite Leitung wird geöffnet, so dass der Spülgasdurchsatz derart ist, dass die Geschwindigkeit des Gases höher als 1,5 m/s, vorzugsweise höher als 3 m/s, weiterhin vorzugsweise höher als 5 m/s ist, wobei die anderen ersten Verbindungsventile (30ab, 30bc) geschlossen sind, und
e. das erste Verbindungsventil (30ac) zwischen der zweiten und der dritten Leitung (3c, 3a) wird geschlossen, wenn die zweite Leitung (3c) ausreichend entleert ist, vorzugsweise im Wesentlichen vollkommen entleert ist.

18. Verfahren nach einem der Ansprüche 16 oder 17, **dadurch gekennzeichnet, dass** die Lagervorrichtung eine Vielzahl von übereinander angeordneten Drehtellern (4-1) umfasst, auf die, wenn alle flexiblen Leitungen ausreichend entleert sind, die flexiblen Leitungen aufgewickelt werden, bis die zweiten Enden (3-6) aller flexiblen Leitungen sich außerhalb des Wassers befinden, wobei vorzugsweise die erste Verbindungs- und Ventilvorrichtung (13-1) genau unter den untersten Drehteller, der mit einer flexiblen Leitung zusammenwirkt, gelangt.

19. Verfahren nach Anspruch 18, **dadurch gekennzeichnet, dass** die erste flexible Leitung (3b) auf einen konvexen Drehteller, wie er in Anspruch 12 definiert ist, gewickelt ist.

20. Verfahren nach einem der Ansprüche 18 oder 19, **dadurch gekennzeichnet, dass** wenigstens eine der zweiten und der dritten Leitung (3c, 3a), vorzugsweise beide Leitungen (3c, 3a), die zweite und die dritte, die für den Flüssigkeitstransfer verwendet wird (werden), auf einen kegelstumpfförmigen Teller mit konkaver Form, wie er in Anspruch 13 definiert ist, gewickelt ist (sind).

## Claims

1. A device for transferring fluid suitable for being arranged from a support (1) installed at sea, in grounded or floating manner (1-2, 1-1), between a said support and a ship (2), preferably of the methane tanker type, arranged alongside or in tandem adjacent to said support (1), said fluid transfer device comprising a plurality, n, of flexible pipes (3a-3b, 3) that are suitable for being stored on a said support (1) by means of a flexible pipe storage device (4) to which a first end (3-1) of each of said flexible pipes is suitable for being fastened, said flexible pipes being suitable for extending between said support (1) and a ship (2) arranged alongside or in tandem adjacent to said support (1), the device for transferring fluid being **characterized in that** it comprises a first connection and valve device (13-1), said flexible pipes being connected together at their second ends (3-6) by said first connection and valve device (13-1), said first connection and valve device (13-1) having n preferably rigid first pipe portions (21a, 21b, 21c) held in preferably parallel fixed positions relative to one another, n being an integer not less than 3, each said first pipe portion (21a, 21b, 21c) comprising:
· at a first end, a first pipe coupling element (23-1a, 23-1b, 23-1c), preferably a male or female portion of an automatic connector);
· at its second end, a second coupling element, preferably a flange, assembled to the second end (3-6) of a said flexible pipe;
· each said first pipe portion (21a, 21b, 21c) including, between its two ends n-1 branch connections (30) enabling it to communicate with respective ones of the n-1 other said first pipe portions, each said branch connection (30) including a first communication valve (30ab, 30bc, 30ac);
· a first connection valve (22a, 22b, 22c) situated between said first coupling element (23-1a, 23-1b, 23-1c) and said branch connection (30);
· said first pipe portions preferably being held parallel by a first rigid support (24) to which they are secured; and
· said first communication valves (30ab, 30ac, 30bc) preferably being butterfly valves and said first connection valves (22a, 22b, 22c) preferably being ball valves.

2. A device according to claim 1, **characterized in that** it comprises a second connection and valve device (13-2) suitable for being arranged on board a said ship (2), said first connection and valve device (13-1) being connected to said second connection and valve device (13-2), said second connection and valve device (13-2) comprising:
· n preferably rigid second pipe portions (26a, 26b, 26c) ;
· each said second pipe portion (26a, 26b, 26c) communicating or being suitable for communicating at one of its ends with a second tank (12) inside said preferably methane tanker type ship (2), and including at its other end a first complementary pipe coupling element (23-2a, 23-2b, 23-2c), said first complementary coupling element being suitable for co-operating in reversible coupling (23) with a said first coupling element (23-1a, 23-1b, 23-1c), said first complementary coupling element preferably being a female or male automatic connector portion (23-2a, 23-2b, 23-2c), respectively;
· said second pipe portions (26a, 26b, 26c) being held in preferably parallel fixed positions relative to one another so as to enable said first complementary coupling element (23-2a, 23-2b, 23-2c) to be coupled with said first coupling element (23-1a, 23-1b, 23-1c);
· each said second pipe portion (26a, 26b, 26c) having a second connection valve (27a, 27b, 27c) suitable for allowing or preventing fluid from flowing in said second pipe portion towards or from said first complementary coupling element when open or closed, respectively;
· said second pipe portions preferably being held parallel to one another by a second rigid support (25) to which they are secured; and
· said second connection valves (27a, 27b, 27c) preferably being ball valves.

3. A device according to claim 1 or claim 2, **characterized in that** it comprises:
· a said support (1) installed at sea, in grounded or floating manner (1-2, 1-1), and a said ship (2), preferably of the methane tanker type, arranged alongside or in tandem adjacent to said support (1); and
· a said flexible pipe storage and guide device (4) arranged on said support; and
· said flexible pipes that are fastened at a first end (3-1) to a said storage device (4), said flexible pipes extending between said floating support and said ship.

4. A device according to claim 2 and claim 3, **characterized in that** it further comprises a second said connection and valve device (13-2), arranged on board a said ship.

5. A device according to claim 2 or claim 3, **characterized in that** said flexible pipes comprise at least one flexible pipe, a "first" flexible pipe (3b), preferably at least two flexible pipes, "first" and "second" flexible pipes (3b, 3c), suitable for transferring liquefied gas therein between said floating support and at least one second tank (12) of said ship (2), preferably of the methane tanker type, and of a third flexible pipe, preferably of diameter smaller than the diameter of said first and second pipes, within which gas corresponding to the gas ceiling of the second tank is suitable for being transferred from a said second tank (12) to a first tank within said floating support or to a liquefaction unit (1b) on a said support prior to being transferred to a said first tank (11).

6. A device according to any one of claims 1 to 5, **characterized in that** it comprises a said support (1) installed at sea, fitted on its surface with a storage and guide device (4) for storing and guiding flexible pipes (3, 3a-3b-3c) and suitable for storing and guiding a plurality of said flexible pipes, and preferably at least three of them, said storage and guide device comprising:
· a first carrier structure (5) resting on or secured to the deck (1c) of said support (1) close to a side (1d) of said support (1), preferably a longitudinal end wall of said support, said first carrier structure (5) supporting a plurality of circular turntables (4-1) arranged one above another;
· each of said turntables (4-1, 4a, 4b, 4c) being suitable for being driven in rotation in powered manner by a first motor (6) about a vertical central axis ZZ' independently of one another, preferably about the same vertical central axis ZZ', each turntable having a central orifice (4-2) surmounted by a central cylinder (4-3) against and around which a said flexible pipe (3, 3a, 3b, 3c) can be wound in concentric juxtaposed spiral turns of increasing diameter resting on the top face (4-1a) of said turntable, said central orifice (4-2) of said turntable being fitted with a rotary joint coupling (7) suitable for providing coupling between firstly a first end (3-1) that is closest to said central cylinder of a flexible pipe wound around said flexible cylinder, said first pipe end (3-1) being suitable for being driven in rotation together with said turntable, and secondly an end (8-1) of a stationary transfer pipe (8) having its other end in communication with at least one first tank (11) within said support (1); and
· a plurality of guide means (10, 10a, 10b, 10c), each said guide means being suitable for guiding the portion (3-2) of said pipe leaving a respective one of each of said turntables in continuity with the portion of pipe wound on said turntable, in such a manner that the various said pipe portions (3-2) leaving the various turntables are arranged in straight lines, being offset in different positions along a horizontal direction Y₁Y'₁ parallel to said side, at different heights, and capable of adopting different orientations (α1, α2, α3) for their vertical axial planes (P1, P2, P3) relative to said horizontal direction Y₁Y₁' parallel to said side (1d).

7. A device according to claim 6, **characterized in that** at least one said flexible pipe (3) is wound, at least in part, against and around a said central cylinder (4-3) in concentric juxtaposed spiral turns of increasing diameters resting on said turntable (4-1), said central cylinder presenting a radius greater than the minimum radius of curvature of said flexible pipe, there being preferably at least three flexible pipes wound, at least in part, respectively on at least three said turntables, including at least one flexible pipe of diameter smaller than the others.

8. A device according to claim 6 or claim 7, **characterized in that** each guide means is arranged at a different height facing a respective one of each of said turntables so as to be suitable for supporting an intermediate curved pipe portion (3-3) between a downstream portion (3-4) of said pipe in a substantially vertical position beside said side (1d) and a said upstream pipe portion leaving the turntable (3-2) in continuity with the wound pipe portion resting on a said turntable, said upstream pipe portion (3-2) leaving the turntable extending on a virtual plane P that is substantially tangential to the surface of the top face (4-1a) of said turntable on which said wound pipe portion is wound, the various downstream pipe portions (3-4) in substantially vertical positions beside said side being arranged in positions that are offset relative to one another in a said direction Y₂Y₂' parallel to said side on leaving said sheaves.

9. A device according to claim 8, **characterized in that**:
· each said guide means (10) comprises a sheave (10-1) mounted to revolve about a horizontal first axis of rotation Y₁Y₁', said sheave also being suitable for swiveling, preferably freely, about a vertical second axis of rotation Z₁Z₁' extending along a diameter of the sheave, said first axis of rotation about which each said sheave revolves preferably being controlled by a second motor (10-6), preferably synchronously with said first motor (6) of each said turntable (4-1) ;
· the various sheaves (10a, 10b, 10c) are arranged offset side by side relative to one another in said horizontal direction Y₁Y'₁ parallel to said side at different heights, the top of each sheave preferably being positioned substantially level with a plane P tangential to the top face (4-1a) of a said turntable (4-1); and **in that**
· each sheave is supported by a second carrier structure (10-2) arranged outside said floating support and fastened to a common side (1d) at a different position in a said horizontal direction Y₁Y₁' parallel to said side, each sheave being mounted to swivel about said vertical second axis of rotation Z₁Z₁' relative to a portion (10-4, 10-5) of its said second carrier structure fastened to said side (1d).

10. A device according to any one of claims 1 to 9, **characterized in that** each said turntable (4-1) includes or co-operates on its under face with wheels (4-5) suitable for co-operating with or respectively supported by elements (5a) of said carrier structure, and each said turntable including a bearing (4-4) at said central orifice, the bearing being secured to said carrier structure (5) and being suitable for enabling said turntable to rotate relative to said first carrier structure (5).

11. A device according to any one of claims 1 to 10, **characterized in that** at least one said turntable (4-1d) presents a top face (4-1a) that is plane and horizontal.

12. A device according to any one of claims 1 to 10, **characterized in that** at least one said turntable (4-1c) presents a top face of convex frustoconical shape, with an angle γ at the apex preferably lying in the range 160° to 178°.

13. A device according to any one of claims 1 to 10, **characterized in that** at least one said turntable (4-1b) presents a top face (4-1a) of concave frustoconical shape, with an angle γ at the apex preferably lying in the range 160° to 178°.

14. A device according to any one of claims 2 to 13, **characterized in that** it comprises a said support (1), a said storage device, preferably a storage and guide device, and at least two said flexible pipes (3), preferably via at least three flexible pipes (3a, 3b, 3c), extending between a said support (1) and a said ship (2), preferably of the methane tanker type, arranged alongside or in tandem adjacent to said floating support (1), at least some of said flexible pipes (3) being stored with the help of a said storage and guide device (4), said flexible pipes being fitted with a said first connection and valve device (13-1), connected to a said second connection and valve device (13-2) arranged or suitable for being arranged on board a said ship (2).

15. A device according to claim 14, **characterized in that** said flexible pipes are floating pipes, floating on the surface over at least a fraction (3-5) of the distance between said support (1) and said ship (2), preferably of the methane tanker type.

16. A method of transferring a fluid, preferably a liquid or gaseous petroleum fluid, from a support (1) installed at sea, in grounded or floating manner (1-2, 1-1), preferably between a said support and a ship (2), preferably of the methane tanker type, arranged alongside or in tandem adjacent to said support (1) by means of a device according to claim 14 or claim 15, the method being **characterized in that** said liquid petroleum fluid, preferably liquid natural gas LNG, is transferred in two said first and second flexible pipes (3b, 3c), and then said first and second flexible pipes (3b, 3c) used for transferring the liquid product are purged by performing the following successive steps:
a. closing said first and second connection valves (22a-22b-22c, 27a-27b-27c), and disconnecting said first and second connection and valve devices (13-1, 13-2) from each other;
b. injecting gas into the first end (3-1) of a first flexible pipe (3b) from said support (1) and opening at least one said first communication valve (30bc) between said first flexible pipe (3b) and a second flexible pipe (3c) assembled to the same said first connection and valve device (13-1), the other said first communication valves (30ac, 30ab) being closed; and then
c. closing said first communication valve (30bc) between said first and second pipes (3b, 3c) when said first pipe (3b) has been emptied sufficiently, and preferably substantially completely emptied.

17. A method according to claim 16, **characterized in that** after step c), said second flexible pipe (3c) is purged completely by performing the following successive steps:
d. injecting gas from the support (1) into said first end (3-1) of said second pipe (3c) and opening said first communication valve (30ac) between said second pipe (3c) and a third flexible pipe (3a) of smaller diameter than said second pipe so that the flow rate of purge gas is such that the speed of said gas is greater than 1.5 m/s, preferably greater than 3 m/s, more preferably greater than 5 m/s, said other first communication valves (30ab, 30bc) being closed; and
e. closing said first communication valve (30ac) between said second and third pipes (3c, 3a) when said second pipe (3c) has been emptied sufficiently, and preferably emptied substantially completely.

18. A method according to claim 16 or claim 17, **characterized in that** said storage device comprises a plurality of turntables (4-1) arranged one above another on which, when all of said flexible pipes have been purged sufficiently, said flexible pipes are rewound until the second ends (3-6) of all of said flexible pipes are above water, preferably with said first connection and valve device (13-1) coming just under the lowest of the turntables co-operating with one of said flexible pipes.

19. A method according to claim 18, **characterized in that** said first flexible pipe (3b) is wound on a said convex turntable as defined in claim 12.

20. A method according to claim 18 or claim 19, **characterized in that** at least one of said second and third pipes (3c, 3a) and preferably both of said second and third pipes (3c, 3a) used for transferring liquid, is (are) wound on a said frustoconical turntable of concave shape as defined in claim 13.
